Europäisches Patentamt

European Patent Office

Office européen des brevets

(19)

(11) **EP 1 009 984 B1**

(12) **EUROPÄISCHE PATENTSCHRIFT**

(45) Veröffentlichungstag und Bekanntmachung des Hinweises auf die Patenterteilung:
**19.11.2003 Patentblatt 2003/47**

(51) Int Cl.[7]: **G01J 9/00**, G01B 11/24, H04N 3/15, H01L 27/148

(21) Anmeldenummer: 97941871.2

(22) Anmeldetag: **05.09.1997**

(86) Internationale Anmeldenummer:
**PCT/DE97/01956**

(87) Internationale Veröffentlichungsnummer:
**WO 98/010255 (12.03.1998 Gazette 1998/10)**

(54) **VERFAHREN UND VORRICHTUNG ZUR BESTIMMUNG DER PHASEN- UND/ODER AMPLITUDENINFORMATION EINER ELEKTROMAGNETISCHEN WELLE**

METHOD AND DEVICE FOR DETERMINING THE PHASE- AND/OR AMPLITUDE DATA OF AN ELECTROMAGNETIC WAVE

PROCEDE ET DISPOSITIF POUR LA DETERMINATION DES INFORMATIONS DE PHASE ET/OU D'AMPLITUDE D'UNE ONDE ELECTROMAGNETIQUE

(84) Benannte Vertragsstaaten:
**AT BE CH DE DK ES FI FR GB GR IE IT LI LU MC NL PT SE**

(30) Priorität: **05.09.1996 DE 19635932**
**07.02.1997 DE 19704496**

(43) Veröffentlichungstag der Anmeldung:
**21.06.2000 Patentblatt 2000/25**

(73) Patentinhaber: **Schwarte, Rudolf**
**57250 Netphen (DE)**

(72) Erfinder: **Schwarte, Rudolf**
**57250 Netphen (DE)**

(74) Vertreter: **Weber, Dieter, Dr. et al**
**Weber, Seiffert, Lieke**
**Taunusstrasse 5a**
**65183 Wiesbaden (DE)**

(56) Entgegenhaltungen:
EP-A- 0 419 936          DE-A- 4 439 298
US-A- 5 381 235          US-A- 5 646 733

- SPIRIG T ET AL: "THE LOCK-IN CCD - TWO-DIMENSIONAL SYNCHRONOUS DETECTION OF LIGHT" IEEE JOURNAL OF QUANTUM ELECTRONICS, Bd. 31, Nr. 9, 1.September 1995, Seiten 1705-1708, XP000526180 in der Anmeldung erwähnt
- PATENT ABSTRACTS OF JAPAN vol. 097, no. 003, 31.März 1997 & JP 08 313215 A (OLYMPUS OPTICAL CO LTD), 29.November 1996,
- SUZUKI T ET AL: "REAL-TIME TWO-DIMENSIONAL SURFACE PROFILE MEASUREMENT IN A SINUSOIDAL PHASE-MODULATING LASER DIODE INTERFEROMETER" OPTICAL ENGINEERING, Bd. 33, Nr. 8, 1.August 1994, Seiten 2754-2758, XP000462289

**Beschreibung**

Die Erfindung betrifft ein Verfahren und eine Vorrichtung zur Bestimmung der Phasen- und Amplitudeninformation einer elektromagnetischen Welle.

Der Begriff Phase steht hier allgemein für Phasenlaufzeit und für die je nach Signalform ebenfalls verwendete Bezeichnung Laufzeit.

Im folgenden wird von einer Lichtwelle anstatt von einer elektromagnetischen Welle gesprochen. Dieses bedeutet jedoch keine Einschränkung nur auf den Spektralbereich der sichtbaren elektromagnetischen Wellen, sondern dient lediglich der Vereinfachung.

Zur Messung von Frequenzkomponenten nach Amplitude und Phase in breitbandigen und hochfrequenten Signalen werden in der elektronischen Meßtechnik und Nachrichtentechnik häufig Phasendetektoren eingesetzt, die das unbekannte Signal mit einer Sinusschwingung multiplizieren bzw. mischen und den Gleichanteil, der bei Vorliegen einer Signalkomponente gleicher Frequenz durch Integration bzw. Tiefpaßfilterung entsteht, bestimmen.

Dieser Prozeß erzeugt die Korrelationsfunktion des unbekannten Signals mit dem Mischsignal für eine bestimmte, einstellbare relative Phasenlage. Durch Ändern der Mischfrequenz (Wobbeln) kann das unbekannte Signal in seine Spektralanteile zerlegt werden. Durch mindestens 3 Phasenlagen der Mischfrequenz können Gleichanteil, Wechselamplitude und Phase der unbekannten Frequenzkomponente gleicher Frequenz bestimmt werden.

Die Untersuchung entsprechender optischer Signale, die eine wachsende Bedeutung in der Meßtechnik und Nachrichtentechnik erlangt haben, geschieht heute i.a. über breitbandige Photodetektoren als elektrooptische Wandler mit anschließender elektronischer Meßwertbestimmung - wie zuvor für elektrische Signale beschrieben.

Wegen des hohen Aufwandes werden diese Verfahren und die entsprechenden Meßgeräte meist nur ein- oder zweikanalig ausgeführt. Bei optischen Signalen sind jedoch häufig gleichzeitig sehr viele parallele Kanäle - insbesondere ganze Bildfolgen - mit hohen Frequenzanteilen zu vermessen.

Neben den spektralen Modulationseigenschaften von zweidimensionalen Lichtwellen interessiert zunehmend der schnelle Verlauf der Einhüllenden in Raum und Zeit. Außerdem möchte man schnell und genau 3D-Objekte z.B. über optische Radarverfahren vermessen, was infolge der Lichtgeschwindigkeit der Echosignale sehr schnelle Detektoren im Subnanosekundenbereich erfordert. Zugleich sollten sie als Detektorarray vorliegen, wenn man auf ein zeitraubendes Abscannen der aktiv oder passiv leuchtenden 3D-Objekte verzichten möchte.

In der Offenlegungsschrift DE 44 39 298 A1, von der die vorliegende Erfindung ausgeht, wird eine solche 3D-Kamera vorgeschlagen.

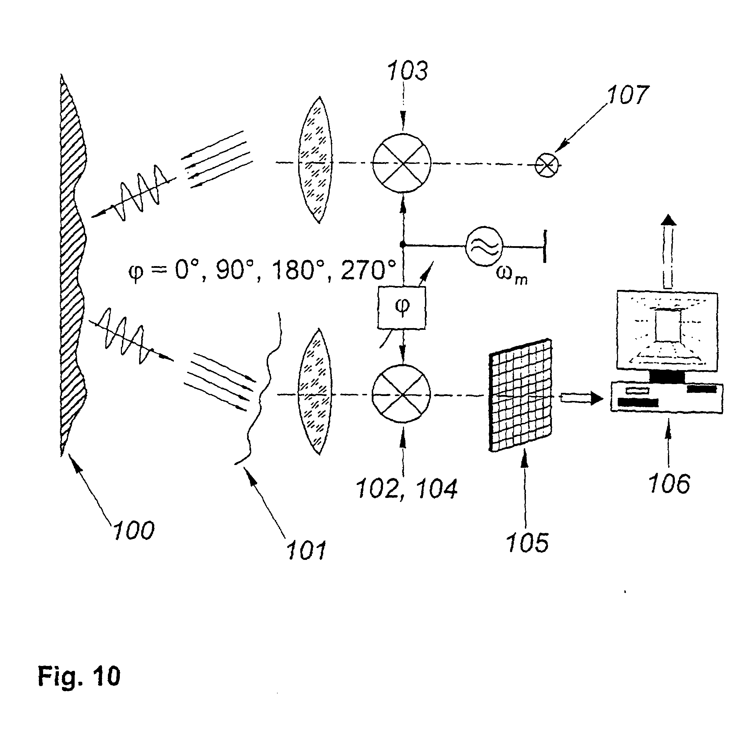

Fig. 10 soll zur Veranschaulichung dieser 3D-Kamera dienen, die auf dem Echolaufzeit- bzw Phasenlaufzeitverfahren beruht. Die von einem modulierten Lichtsender 107 und 103 abgestrahlte und von dem 3D-Objekt 100 reflektierte HF-modulierte Lichtwelle 101 enthält die gesamte Tiefeninformation in der Verzögerung der Phasenfront. Wird die einfallende Lichtwelle in der Empfangsapertur 102 nochmals mit einem zweidimensionalen, optischen Mischer 104 der gleichen Frequenz moduliert, was einem homodynen Misch- oder Demodulationsprozeß entspricht, so entsteht ein stationäres Hochfrequenz-Interferogramm.

Dieses HF-Interferogramm kann mit einer konventionellen CCD-Kamera 105 aufgenommen und mit einer Bildverarbeitung 106 weiterverarbeitet werden. Die Integration des Gleichanteils des Mischproduktes in der CCD-Photoladung entspricht der Bildung der Korrelationsfunktion der beiden Mischsignale. Die abstandsbezogenen Phasenverzögerungen durch die Echolaufzeiten sowie die Amplituden können pixelweise aus drei oder mehr Interferogrammen durch unterschiedliche Phasen der demodulierenden Mischfrequenz, z.B. 0°, 120° und 240° oder 0°, 90°, 180° und 270° berechnet und somit das 3D-Tiefenbild rekonstruiert werden.

Der zweidimensionale optische Mischer 103 bzw, 104, der auch als räumlicher Lichtmodulator (Spatial Light Modulator SLM) bezeichnet wird, besteht dabei bspw. aus einer Pockelszelle, die eine Reihe schwerwiegender, in der Literatur beschriebener Nachteile aufweist.

Weitere Realisierungsmöglichkeiten bieten LCD-Fenster, die zwar billig, aber bzgl. der gewünschten Bandbreite um etwa den Faktor 1000 zu niedrig liegen.

Ebenfalls teuer und aufwendig ist der Einsatz einer sogenannten Mikrokanalplatte, wie sie in Bildverstärkern eingesetzt wird. Durch Modulation der an den Mikrokanälen angelegten Beschleunigungsspannung, die die Sekundärelektronemission in den Mikrokanälen beeinflußt, kann die Verstärkung moduliert werden.

Weiterhin wird im Stand der Technik ein Vorschlag eines 2D-Korrelators auf der Basis eines CCD-Photodetektorarrays gemacht: "The Lock-In CCD -Two Dimensional Synchronous Detection of Light" von Spirig, Seitz et. al., veröffentlicht im IEEE Journal of Quantum Electronics, Vol. 31, No. 9, Sept. 1995, Seite 1705 - 1708. Dort wird ein Photopixel über 4 Transfergates abgefragt, um die Phase sinusmodulierten Lichts zu ermitteln. Pro Sinusperiode werden mit den 4 Transfergates je eine äquidistante Probe entnommen, wodurch sich die Phase leicht berechnen läßt. Dieser Prozeß ist für die aufgezeigten Problemstellungen zu langsam, da das harmonische Lichtsignal zunächst während einer die Bandbreite signifikant begrenzenden Abtastdauer aufintegriert wird. Erst dann erfolgt mit der Übernahme der gespeicherten Ladung als Abtastprobe der gewünschte Mischprozeß.

Der Erfindung liegt daher das technische Problem zugrunde, ein Verfahren und eine Vorrichtung zur Bestimmung der Phasen- und/oder Amplitudeninformation und damit der Einhüllenden einer Lichtwelle anzugeben, die ein einfacheres, breitbandigeres und preisgünstigeres Korrelatorkonzept und über eine vorgebbare Beleuchtung eine schnelle 3D-Objektvermessung ermöglichen.

Das zuvor aufgezeigte technische Problem wird nun durch das Verfahren nach Anspruch 1 sowie durch das photonische Mischelement nach Anspruch 14, durch die Mischelementanordnung nach Anspruch 20 und durch die Vorrichtung nach Anspruch 23 gelöst.

Das erfindungsgemäße Prinzip basiert auf einer durch die Modulationsphotogatespannung erzeugten Drift und Trennung der durch die Lichtwelle photogenerierten Minoritätsladungsträger im Material unterhalb von mindestens zwei benachbarten lichtempfindlichen Modulationsphotogates. Diese Ladungsträger driften dabei unter dem Einfluß der an den Modulationsphotogates anliegenden Modulationsphotogatespannungen $U_{am}(t)$ und $U_{bm}(t)$ je nach Polarität bzw. Phase zu den mit vorzugsweise der doppelten Gleichspannung $U_a$ und $U_b$ vorgespannten Akkumulationsgates. Die Modulationsphotogatespannungen $U_{am}(t)$ und $U_{bm}(t)$ liegen vorzugsweise komplementär an und setzen sich vorzugsweise aus einer Vorspannung $U_0$ und der im Gegentakt überlagerten Modulationsspannung $+U_m(t)$ bzw. $-U_m(t)$ zusammen. Die beiden Modulationsphotogates bilden zusammen vorzugsweise eine quadratische Fläche. Ein Pixel mit nur zwei Modulationsphotogates kann auch als Zweifachpixel bezeichnet werden.

Dieses erfindungsgemäße Prinzip setzt den photoelektrischen Quanteneffekt, verursacht durch elektromagnetische Wellen, voraus. Trotzdem wird - ohne daß dies als Einschränkung zu begreifen ist - immer von Lichtwellen gesprochen.

In der modulationsspannungsabhängigen bzw. phasenabhängigen Drift der photoerzeugten Ladungsträger zur rechten oder zur linken Seite der Modulationsphotogates ("Ladungsschaukel") besteht der eigentliche Misch- bzw. Multiplikationsprozeß. Dabei stellt die Ladungsdifferenz zwischen den so getrennten, unter den Akkumulationsgates gesammelten und an die Ausleseelektronik weitergeleiteten Ladungsträgern unter Berücksichtigung einer Integration in einer vorgegebenen Zeit ein Maß für die Korrelationsfunktion der Einhüllenden des einfallenden modulierten Lichtsignals und der Modulationsspannung $U_m(t)$ dar.

Gleichzeitig bleibt die Ladungssumme dieser zu den Akkumulationsgates gedrifteten und weitergeleiteten Ladungsträger von der Stellung der Ladungsschaukel unbeeinflußt und steht als entsprechende Pixelintensität bzw. als Pixelgrauwert zur Verfügung.

Um die relative Phase oder Zeitverzögerung der einfallenden Lichtwelle zu bestimmen, ist es - wie oben beschrieben - notwendig, drei Messungen für die drei Größen Gleichspannungs- und Wechselspannungsanteil sowie relative Phase durchzuführen. Daher ist eine Ausgestaltung des Pixels des photonischen Mischelementes mit drei lichtempfindlichen Modulationsphotogates möglich, die mit Modulationsphotogatespannungen beaufschlagt werden, die drei verschiedene Phasenverschiebungen zur vom Sender ausgestrahlten Lichtwelle aufweisen.

Zur Bestimmung der Phase des Empfangssignals an jedem Pixel des photonischen Mischelementes aus den resultierenden Korrelationsamplituden werden zweckmäßiger Weise jedoch vier verschiedene Messungen bei vier verschiedenen Phasen des Mischersignals herangezogen. Dadurch erhält man eine Überbestimmung, durch die das Rauschen entscheidend verringert werden kann.

Durch die Gegentaktanordnung der Modulationsphotogatespannungen an zwei Modulationsphotogates pro Pixel werden jeweils zwei dieser Messungen gleichzeitig durchgeführt. Daher genügt es bspw. bei einer HF-Modulation, zwei um jeweils 90° verschobene Messungen bei 0°/180° wie auch bei 90°/270° Phasendifferenz der Modulationsphotogatespannungen $U_{am}(t)$ bzw. $U_{bm}(t)$ gegenüber der Phase des eingestrahlten Lichtes durchzuführen, um die notwendigen vier verschiedenen Meßwerte zu erhalten.

Besonders bevorzugt ist daher eine Anordnung, bei der das jeweils ein Pixel bildende photonische Mischelement aus vier symmetrisch angeordneten Modulationsphotogates besteht, wobei jeweils zwei sich gegenüberliegende Modulationsphotogates mit Gegentakt- bzw. um 180° phasenverschobenen Modulationsphotogatespannungen beaufschlagt sind, wobei die beiden im Zusammenhang mit dem Zweifachpixel zuvor beschriebenen um jeweils 90° verschobenen Messungen bei 0°/180° wie auch bei 90°/270° Phasendifferenz der Modulationsphotogatespannungen in diesem Fall gleichzeitig durchgeführt werden. Ein solches Pixel kann auch als Vierfachpixel bezeichnet werden.

Für eine Kalibrierung der Phasenverschiebung der Modulationsphotogatespannungen $U_{am}(t)$ und $U_{bm}(t)$ ist es weiterhin in bevorzugter Weise möglich, einen Teil der vom Sender abgestrahlten Lichtwelle als Referenz direkt auf mindestens einen von mehreren Pixeln einer Anordnung von einer Mehrzahl von photonischen Mischelementen zu richten. Die von diesem direkt bestrahlten Pixel gewonnene Phasen- und Amplitudeninformation kann dann für die Kalibrierung benutzt werden bzw. für eine Justierung der Phasenverschiebung auf einen vorgegebenen Wert verwendet werden.

Umgekehrt kann bei fremderregter unbekannter Modulation der von einem aktiven Objekt abgestrahlten, einfallenden Lichtwelle mit Hilfe mindestens eines photonischen Mischelementes die Lichtwelle mit der bekanntlich hohen Auflösung eines Lock-in-Verstärkers vermessen werden. Dazu bildet das photonische Mischelement zusammen mit einem an die Stelle des Senders tretenden durchstimmbaren Modulationsgenerators einen Phasenregelkreis. Weiterhin findet sowohl bei der Lock-in-Verstärkung der Phase-Lock-Loop für bspw. für eine HF-Modulation als auch der Delay-Lock-Loop für eine digitale Modulation Anwendung.

Für die Vermessung passiver Objekte kann die Modulation des abgestrahlten Lichtes sowie die entsprechende Modulation der Modulationsphotogatespannungen $U_{am}(t)$ bzw. $U_{bm}(t)$ auf verschiedene Weise durchgeführt werden. Zunächst kann eine kontinuierliche HF-Modulation durchgeführt werden, wobei wiederholt in Zeitabständen, die rückwirkend von der Pixelintensität beeinflußt werden können, die Ladungsdifferenzen und die Ladungssummen zur Auswertung der Phasen- und Amplitudeninformation der Lichtwelle ausgelesen werden.

Vorteilhaft ist eine intermittierende Betriebsweise mit pulsförmiger HF-Modulation und Beleuchtung, z.B. um eine störende Hintergrundbeleuchtung jeweils kurzzeitig zu übertreffen. Dabei werden nur die photoerzeugten Ladungen jeweils während des HF-Impulses integriert und anschließend ausgewertet.

Bei der Bestimmung insbesondere der Phasen- bzw. Laufzeitinformation von reflektierten Lichtwellen können zur Erhöhung der Phasen- bzw. Laufzeitauflösung die aus der Radartechnik bekannten HF-Impulskompressionsverfahren mit schmalen Korrelationsfunktionen, z.B. die Chirp-Technik eingesetzt werden. Dabei ist sowohl das Modulationssignal des einzelnen photonischen Mischelements als auch die mit vorgegebener Phasenbeziehung beleuchtende Lichtwelle des Senders und somit auch die mit der gesuchten Phasenbeziehung reflektierte Lichtwelle repetierend mit einem Chirp moduliert. Durch die Chirpmodulation werden in geeigneter Weise durch Einfügen einer einstellbaren Verzögerung zwischen der Modulationsphotogatespannung des photonischen Mischelements und des vom Sender abgestrahlten Lichts Mehrfachziele aufgelöst bzw. störende Mehrfachreflexionen einer beleuchteten Szene unterdrückt.

Als weitere Modulation steht die auch unten beschriebene Pseudo-Rausch-Modulation (Pseudo-Noise(PN)-Modulation) sowohl als Basisband-PN- als auch als HF-PN-Modulation zur Verfügung. Ein Samplingbetrieb mit Abtast- und Haltevorgängen (Sample-and-Hold) bei repetierenden Lichtsignalen ist ein Sonderfall der Mischung und Korrelation mit Nadelimpulsen. Auch hierfür sowie für andere Anwendungen gepulster Modulation kann das erfindungsgemäße photonische Mischelement vorteilhaft eingesetzt werden.

Die aufgezählten Modulationsarten sind an sich sämtlich aus dem Stand der Technik bekannt.

Die zu den Akkumulationsgates gedrifteten Ladungen können nun in verschiedener Weise weiterverarbeitet werden. Zum einen kann das photonische Mischelement in CCD-Technologie realisiert sein, wobei dann die Ladungen unterhalb der Akkumulationsgates gesammelt bzw. integriert und anschließend in herkömmlicher Weise bis zur CCD-Auleseschaltung z.B. im Dreiphasen-Schiebetakt verschoben und über eine p- oder n-Diffusion ausgelesen werden.

Zum anderen kann das photonische Mischelement in CMOS-Technologie als Aktivpixelelement mit pixeleigener Auslese- und Signalvorverarbeitungselektronik realisiert sein. Dabei wird praktisch die in der CCD-Technik übliche Ausleseschaltung jeweils beidseitig bis unmittelbar an die Modulationsphotogates herangeführt. Die Akkumulationsgates werden dabei vorzugsweise als gesperrte kapazitatsarme pn-Dioden ausgestaltet und leiten die ankommenden photogenerierten Ladungen vorzugsweise unmittelbar über die Elektroden $G_a$ und $G_b$ an die Pixelauslese- und Signalvorverarbeitungselektronik zur dortigen Speicherung und Verarbeitung weiter.

Im letzteren Fall werden also die beiden Ladungsanteile der Ladungsschaukel kontinuierlich ausgelesen und können z.B. mit einem Ladungsverstärker praktisch rückwirkungsfrei auf je einer nachgeschalteten Kapazität gespeichert werden.

Es ist Stand der Technik, daß vor jeder neuen Messung die beteiligten und aufgeladenen Kapazitäten durch elektronische Reset-Schalter entladen werden und daß zweckmäßig die im Reset-Zustand gemessenen Fehlspannungen zur Korrektur der eigentlichen Meßwerte verwendet werden. Diese Anwendung des pixelweisen rückwirkungsfreien Auslesens hat den Vorteil, daß die gesamte Dynamik des photonischen Mischelementes und somit des Meßverfahrens erheblich gegenüber der Realisierung in CCD-Technologie gesteigert werden kann.

In weiter bevorzugter Weise ist es möglich, die Phasen- und Amplitudeninformation in einer Pixelauslese- und Signalvorverarbeitungselektronik vorzugsweise als On-chip-Integration direkt zu berechnen. Solch ein anwendungsspezifischer optoelektronischer Chip (ASOC) bzw. solch ein Aktiv- Pixel-Sensor (APS) erhöht die Meßrate und ermöglicht eine pixelweise Vorverarbeitung der Phasen und/oder Amplituden.

Ein wichtiger Vorteil der vorliegenden Erfindung liegt darin, daß die Modulation gleichzeitig mit der Ladungserzeugung und -trennung erfolgt. Mit anderen Worten finden die Detektion und die Mischung gleichzeitig und ohne zusätzlich rauschende und bandbegrenzende Zwischenstufen statt. Daher werden die im Stand der Technik unter anderem auftretenden zeitlichen Driftfehler verhindert, die bei einer zeitlich und räumlich von der Detektion getrennten Modulation und Integration der Ladungen zwangsläufig auftreten und nicht zu unterdrücken sind.

Ein weiterer Vorteil der vorliegenden Erfindung liegt in der hohen Grenzfrequenz des photonischen Mischelements. Die Grenzfrequenz des Ladungstransfers durch die Gegentaktmodulationsspannung ist bezüglich der maximalen Driftlänge oder Transferstrecke, also der Summenlänge der Modulationsphotogates, mit der Grenzfrequenz entsprechender MOS-Transistoren vergleichbar und erreicht somit den GHz-Bereich. Weiterhin werden durch die antisymmetrische Ladungsträgertrennung und -differenzbildung störende Gleichtaktsignale unterdrückt. Jedes nicht mit dem Modulationssignal korrelierende Störsignal, z.B. die Hintergrundbeleuchtung, wird in der Ladungsdifferenz unterdrückt, was zu einem hohen Signal-zu-Rauschverhältnis führt. Weiterhin tritt nur ein geringes Zeitdriften wegen der Zusammenfassung von Detektion, Mischen sowie Ladungsträgerintegration und - differenzbildung auf dem gleichen Chip auf. Zudem wird eine Zusammenfassung praktisch aller Meßfunktionen innerhalb einer einzigen Halbleiterstruktur möglich.

Gegenüber dem Stand der Technik der DE 44 39 298 A1 mit der Verwendung von Pockelszellen als Modulatoren sind nur geringe Modulationsspannungen im 1 statt 1000 Volt-Bereich notwendig. Zudem wird durch eine 2D-Anordnung von erfindungsgemäßen photonischen Mischelementen eine große Apertur auf der Empfängerseite gewährleistet.

Für die Bestimmung der Phasen- und/oder Amplitudeninformation ist weiterhin kein kohärentes oder polarisiertes Licht erforderlich. Damit können weitere spezifische Eigenschaften der einfallenden Lichtwellen durch Vorschalten selektierender Filter z.B. bezüglich Polarisation und Wellenlänge des Lichts genutzt werden. Zusätzlich sind eine hohe Empfindlichkeit und ein hohes Signal-zu-Rausch-Verhältnis durch den Wegfall der nach dem Stand der Technik eingesetzten breitbandigen Photodetektorverstärker und elektronischen Mischer gegeben.

Die spektrale optische Bandbreite der zu vermessenden Lichtwellen wird durch die spektrale Photoempfindlichkeit des in der Raumladungszone unter den Photogates verwendeten Materials bestimmt, d.h. z.B. bei Silizium etwa der Wellenlängenbereich 0,3 bis 1,1 µm, bei InGaAs etw 0,8 bis 1,6 µm und bei InSb etwa 1 bis 5,5 µm.

Die photonischen Mischelemente können in einer beliebigen null-, ein- oder zweidimensionalen Anordnung angeordnet werden und bieten somit ein breites Spektrum an Anwendungsgeometrien. Dabei können mehrere 100.000 photonische Mischelemente parallel mit einer Modulationsbandbreite von z.B. 10-1000 MHz betrieben werden, so daß z.B. eine Kameraaufnahme einer 3D-Szene mit Bestimmung der Entfernungsinformation in jedem Bildpunkt extrem schnell realisierbar ist. Über die Ladungsdifferenzen der zu den Akkumulationsgates fließenden und ausgelesenden Ladungen wird pixelweise das Phasenbild $\varphi(x,y)$ oder - im Falle modulierter Beleuchtung - das Entfernungsbild bzw. Tiefenbild mit dem Radiusvektor bzw. Voxelabstand $R(x,y)$ bestimmt. Die entsprechenden Ladungssummen ergeben den konventionellen Pixelgrauwert $A(x,y)$. Beide können zum skalierten Grauwertbild bzw. zum 3D-Bild $A(x,y,z)$ zusammengefaßt werden.

Die 3D-Bild-Wiederholrate liegt dabei im Bereich von etwa 10 Hz bis über 1000 Hz und hängt von der Anzahl der verwendeten photonischen Mischelemente und der Lichtintensität ab. Durch zusätzliche Farbfilter ist es möglich, die üblichen Farbwerte $Rot(x,y)$, $Grün(x,y)$ und $Blau(x,y)$ des Entfernungsbildes $R(x,y)$ zu gewinnen.

Durch den integrierten Aufbau von Mischung und Ladungsträgerintegration wird nicht zuletzt auch ein einfacher Aufbau des photonischen Mischelementes erreicht. Schließlich muß kein besonderer Aufwand im Empfangskanal geleistet werden, denn eine konventionelle Abbildungsoptik reicht für die Abbildung der einfallenden, ggfs. reflektierten Lichtwelle aus, sofern eine ein- oder zweidimensionale Szene und nicht nur ein Punkt aufgenommen werden soll. Durch synchrones Zoomen der Sende- und Empfangsoptik ist die Meßvorrichtung an unterschiedliche 3D-Szenen flexibel anpaßbar.

Bei dem erfindungsgem äßen Verfahren und dem entsprechenden Mischelement bzw. einer Anordnung von mehreren Mischelementen ist es zweckmäßig, wenn die Pixelphase bzw. die Pixellaufzeit und die Pixelhelligkeit direkt mit Hilfe einer Aktiv-Pixel-Sensor-Struktur (APS) ermittelt und dann vorzugsweise über eine auf demselben Chip untergebrachte Multiplexstruktur (sogenannte On-Chip-Multiplexstruktur) wahlfrei oder auch seriell ausgelesen wird. Dies erhöht die Verarbeitungsgeschwindigkeit und vermindert auch die Zahl der weiteren benötigten Komponenten.

Wenn weiterhin die Pixelhelligkeit als Summe der Ladungen der zugehörigen Akkumulationsgates als Grauwertbild ausgewertet wird, so ist eine Ausgestaltung der Erfindung besonders bevorzugt, welche, im Fall einer Hintergrundbeleuchtung, d.h. einer nicht modulierten Beleuchtung, die neben der modulierten Beleuchtung vorhanden ist, die durch diese zusätzliche Beleuchtung hervorgerufenen Ladungen an den Akkumulationsgates rechnerisch eliminiert, indem die Differenz zwischen den Grauwertbildern gebildet wird, die man zum einen mit eingeschalteter modulierter Beleuchtung und zum anderen ohne die modulierte Beleuchtung, d.h. nach Ausschalten der modulierten Lichtquelle erhält. In dieser Grundhelligkeit bzw. diesem Sockelbetrag der Ladungen an den Akkumulationsgates ist keine Korrelationsinformation enthalten, so daß die tatsächliche Korrelationsinformation nach dem Subtrahieren dieses Sockelbetrages deutlicher hervortritt.

Wie bereits erwähnt, ist es selbstverständlich zweckmäßig, wenn mehrere der Mischelemente entweder in einer linearen, einer flächigen oder in einer räumlichen Feldanordnung verwendet werden. Unter einer "linearen" Feldanordnung soll dabei nicht nur ein Feld von Mischelementen verstanden werden, welche in einer geraden Reihe neben- bzw. hintereinander angeordnet sind, sondern generell ein Feld von Mischelementen, welche entlang einer Linie angeordnet sind, wobei diese Linie gerade oder auch gekrümmt verlaufen kann. Auch bei den flächigen Anordnungen können nicht nur ebene Mischelementanordnungen in Form einer rechtwinkligen Matrix vorgesehen werden, wenn diese auch aus praktischen Gründen zu bevorzugen sein mag, sondern die Mischelemente können im Prinzip nach einem beliebigen Muster und auch auf einer gekrümmten Fläche, zum Beispiel auf der Innenfläche einer Kugelschale, angeordnet werden. Ebenso sind auch Feldanordnungen der Mischelemente auf abgeknickten Flächen, d.h.

gleichzeitig auf zwei Flächen, die einen Winkel miteinander einschließen, verwendbar und für bestimmte Anwendungen sinnvoll. Derartige Anordnungen fallen unter den Begriff der "räumlichen Feldanordnung".

Bei solchen Feldanordnungen aus mehreren, gegebenenfalls mehreren hundert oder tausend Mischelementen, ist eine Ausgestaltung des erfindungsgemäßen Verfahrens vorteilhaft und zweckmäßig, bei welcher mindestens eines der Pixel bzw. Mischelemente direkt mit einem Teil der als Beleuchtung dienenden, intensititätsmodulierten elektromagnetischen Welle bestrahlt wird, wobei das so erhaltene Meßergebnis an diesem mindstens einen Pixel zum Kalibrieren der übrigen Phasen und Helligkeitsergebnisse verwendet wird. Dabei ist es zweckmäßig, wenn ein solches Referenzpixel vom Sender mit wahlweise unterschiedlichen Intensitäten beaufschlagt wird, bzw. für den Fall, daß mehrere Referenzpixel verwendet werden, daß jedes dieser Pixel mit einer anderen Intensität beaufschlagt wird. Hierdurch kann man Fehler vermeiden, die sich möglicherweise aufgrund des großen Dynamikumfanges der Meßsignale einstellen könnten.

Bei einer ein- oder mehrdimensionalen Mischelementanordnung der vorstehend genannten Art ist es zweckmäßig, wenn die Pixel in MOS-Technik auf einem Siliziumsubstrat ausgeführt und mit einer Multiplexstruktur, vorzugsweise mit einer CCD-Struktur, auslesbar sind.

Es versteht sich, daß die erfindungsgem äßen Mischelemente ohne weiteres für die Verwendung in einer digitalen Photokamera oder Videokamera geeignet sind. Hierzu muß lediglich eine entsprechende Mischelementanordnung (zum Beispiel in Form einer rechteckigen Matrix) mit integrierter Empfangsoptik, Auswerteelektronik und einer Signalverarbeitung für die Differenzsignale, die Summensignale und die zugehörigen Referenzsignale vorgesehen werden, zusammen mit einem digitalen Speicher für das daraus berechnete Grauwertbild und das Laufzeit- bzw. Entfemungsbild. Hinzu kommt noch ein entsprechender Sender bzw. eine entsprechende Lichtquelle, welche eine dreidimensionale Szene mit modulierten elektromagnetischen Wellen bzw. moduliertem Licht bestrahlt, sowie eine auf die Empfangsoptik entsprechend einstellbare Sendeoptik, wobei alle diese Komponenten zu einer kompakten Einheit als digitale Kamera zusammengefaßt sind. Dabei besteht der Unterschied zwischen einer digitalen Photokamera und einer digitalen Videokamera im wesentlichen nur darin, daß bei einer entsprechenden Videokamera eine relativ große Zahl von Bildern in entsprechend kurzen Zeitabständen aufgenommen und gespeichert werden muß, so daß entsprechende Einrichtungen zur Speicherung und Wiedergabe entsprechender Bildfolgen vorgesehen werden müssen.

Es versteht sich, daß darüberhinaus in allen Anwendungen die Beleuchtung bzw. Bestrahlung einer Szene mit moduliertem Licht aus verschiedenen Spektralbereichen erfolgen kann, so daß man mit den so gewonnenen Farbauszügen der Bilder vollständige Farbbilder mit der gleichzeitig gelieferten räumlichen Tiefeninformation erfassen und rekonstruieren kann.

Für eine höhere Bandbreite und zum Beispiel auch für eine verbesserte Kantenerfassung kann die Verwendung einer Mikrolinsenoptik zweckmäßig sein, bei welcher jedem Mischelement bzw. Pixel eine Mikrolinsenoptik zugeordnet ist, die das einfallende Licht auf den zentralen Bereich des Pixels reduziert, so daß Abweichungen von dem idealen Potentialverlauf an den Modulationsgates, die vor allem in den Randbereichen der photoempfindlichen Flächen auftreten, praktisch ausgeblendet werden. Außerdem kann durch eine mit Hilfe der Mikrolinsenoptik erzeugte unscharfe Abbildung in der Detektorebene der Mischelemente verhindert werden, daß durch die Abbildung von Kanten, deren Abbildung zufällig in der Mitte zwischen den beiden Pixelhälften verläuft, Differenzladungen an den Akkumulationsgates erzeugt werden, die eine Korrelation bzw. eine falsche Tiefeninformation vortäuschen.

Feldanordnungen mit den erfindungsgemäßen Photomischelementen eignen sich auch gut für die Erfassung und gegebenenfalls auch Verfolgung vorgegebener ein-, zwei- oder dreidimensionaler Strukturen im Blickfeld der betreffenden Anordnung und unter zusätzlicher Berücksichtigung der Tiefeninformation bzw. des Objektabstandes des gesuchten und gegebenenfalls zu verfolgenden Objektes.

Konkret wird durch eine wahlweise Bestimmung der Amplituden und der Verschiebung der X-, Y- und der Zeitkoordinate T der Modulationssignale um ($\Delta$X, $\Delta$Y, $\Delta$T) (wobei X- und Y zwei linear unabhängige Koordinaten definieren, die die Ebene einer Mischelementmatrix aufspannen und mit der Zeit T die Laufzeitverzögerung der Modulationssignale gemeint ist) eine dreidimensionale Korrelation durchgeführt, wodurch ein vorgegebenes, dreidimensionales Objekt im Raum gesucht, erfaßt und gegebenenfalls verfolgt wird.

Das erfindungsgem äße Photomischelement hat darüberhinaus auch ein breites Anwendungsfeld auf dem Gebiet der optischen Datenübertragung. Dabei wird das erfindungsgem äße Photomischelement in einem herkömmlichen optischen Signalempfänger, gegebenenfalls inklusive Signalregeneration, einfach anstelle einer Photodiode verwendet, wobei die Form des Modulationssignals optimal an die Signalform angepaßt ist und die Phase des Modulationssignals in einem Phasenregelkreis ebenfalls optimal an die Phasenlage des Empfangssignals angepaßt ist. Mit anderen Worten, der Takt wird aus dem Signal selbst gewonnen und zur optimalen Wichtung des Empfangssignales benutzt, wodurch das Signal in optimaler Weise von dem störenden, verrauschten Untergrund separiert wird. Gegenüber herkömmlichen Photodioden kann auf diese Weise die Empfindlichkeit und Genauigkeit in der optischen Datenübertragung erheblich verbessert werden. Dies könnte insbesondere auch eine erhebliche Verlängerung der optischen Übertragungsstrecken ohne Zwischenverstärkung und eine höhere Zahl paralleler Nachrichtenkanäle im Zeit-, Frequenz- und Codemultiplex ermöglichen.

Schließlich ist das erfindungsgemäße Photomischelement zum Beispiel auch einsetzbar in Positionserfassungssystemen auf optischer Basis, wobei die Funktionsweise im Prinzip ähnlich ist wie bei dem bekannten GPS-System, welches mit Hilfe von Satellitensendern, die die codierte Abstrahlung von Signalen ermöglichen, eine sehr genaue Positionsbestimmung erlauben. Bei einem entsprechenden optischen Positionserfassungssystem wäre der vom GPS-System bekannte Satellitensender durch eine entsprechend näher an dem Objekt, dessen Position zu bestimmen ist, angeordnete, breit streuende, modulierte Lichtquelle, zum Beispiel mittels Laserdioden und Streuoptik zu ersetzen, während der Empfänger von einem oder mehreren Photomischelementen auf dem Objekt gebildet wird, vorzugsweise von mehreren in verschiedenen Richtungen ausgerichteten Photomischelementen, um die Signale von an verschiedenen Punkten stationär angeordneten Lichtquellen mit verschiedenen Modulaitonen zu erfassen. Die codierte Modulation ermöglicht dabei eine eindeutige Zuordnung von stationären Lichtquellen und von dem Objekt, dessen Position bestimmt werden soll, sowie den zugehörigen Signallaufzeiten, mit deren Hilfe die Position bestimmt wird.

Eine weitere Anwendung ist die eines Demultiplexers für die optische Datenübertragung. Die Codierung in Form einer speziellen Modulation und die zugehörige Korrelation mit Hilfe des Photomischelementes ermöglicht dabei eine eindeutige Zuordnung verschiedener Kanäle.

Eine weitere Anwendung und Ausnutzung der hohen Phasenempfindlichkeit der erfindungsgem äßen Photomischelemente liegt in der Messung des Sagnac-Effektes, d.h. der Laufzeit- bzw. Phasenverschiebung von Lichtwellen in rotierenden Bezugssystemen. Hierzu wird moduliertes Licht in eine vorzugsweise in mehrere Windungen gelegte Lichtleitfaser eingekoppelt und der Ausgang der Lichtleitfaser beleuchtet eines der erfindungsgem äßen Photomischelemente. Die Modulationsgates dieses Mischelementes werden mit derselben Frequenz moduliert wie die eingekoppelten Lichtwellen, so daß das Korrelationsergebnis in Form der Ladungsverteilung an dem Photomischelement ein Maß für die aktuelle Frequenz- bzw. Phasenverschiebung liefert. Während jeder Drehung des Bezugssystems, bei welcher die Rotationsachse nicht in der Ebene der Windungen des Lichtwellenleiters liegt, ändert sich Frequenz und Laufzeit und damit auch die Phasenlage und werden automatisch von dem Photomischelement erfaßt. Bemerkenswert ist dabei, daß mit dem Photomischelement derartige Faserkreisel-Kompaßsysteme auf der Basis des Sagnac-Effektes jetzt mit Hilfe von inkohärentem Licht realisiert werden können, die keine Probleme hinsichtlich ihrer Langzeitstabilität verursachen, da die entsprechenden Fehlerquellen nach dem Stand der Technik, der Hochfrequenzverstärker nach dem optischen Detektor und der elektronische Mischer vollständig entfallen.

Zusätzlich kann neben der mit einem solchen System ermöglichten absoluten Richtungsmessung auch noch die Geschwindigkeitsmessung eines bewegten Objektes mit Hilfe des erfindungsgemäßen Photomischelementes erfolgen, indem zum Beispiel ein Teil der Lichtwellen in einem Strahlteiler vor Einleitung in den Lichtwellenleiter ausgeblendet und auf ein ruhendes Objekt gerichtet wird, wobei das von dem ruhenden Objekt reflektierte Licht von einem entsprechenden Photomischelementempfänger aufgefangen und in der bereits mehrfach beschriebenen Art und Weise - hier bezüglich der Doppler-Frequenzverschiebung - ausgewertet wird.

Je nach Bedeutung der zusätzlichen Tiefeninformation eines Zeilen- oder Matrixbildes können in einem CCD-, CMOS- oder TFA (Thin Film on ASIC)-Bildsensor eine bestimmte Anzahl von Photomischelementen in der entsprechenden Technologie integriert werden.

Weiterhin kann bei der Anwendung einer erfindungsgemäßen 3D-Zeilenoder Matrixkamera der zusätzliche Einsatz einer herkömmlichen 2D-Kamera sinnvoll sein, wobei eine vorzugsweise spektrale Zuordnung und Zuführung des aktiven modulierten Beleuchtungsanteils zur 3D-Kamera und des übrigen unmodulierten Beleichtungsanteils vorzugsweise mit einem Strahlteiler vorgenommen wird.

Für Anwendungen der Photomischelemente zur 3D-Vermessung auch für größere Entfernungen, für die die modulierte Beleuchtung zu schwach ist, kann eine Kombination aus mindestens zwei 3D-Zeilen- oder Matrixkameras Anwendung finden, bei der im Nahbereich erfindungsgemäß nach dem Laufzeitprinzip und im Fembereich nach dem Triangulationsprinzip mit i.a. vorhandener Hintergrundbeleuchtung vermessen wird.

Die Tiefenvermessung im Nahbereich geschieht dabei wie bisher beschrieben, hier allerdings parallel über mindestens zwei Kameras.

Für die Tiefenvermessung im Fembereich werden die über den PMD-Chip-Mittelpunkt gebildeten optischen Achsen der Kameras auf einen gemeinsamen Schnittpunkt im zu vermessenden Volumenbereich gerichtet, zum Beispiel durch entsprechende PMD-Chip-Verschiebung in horizontaler und vertikaler Richtung und bezüglich der PMD-Chip-Abst ände, wobei gleichzeitig die Fokussierung der Kameraoptiken auf diese Entfernung eingestellt wird. Bei entsprechendem vorherigen Abgleich stimmen dann die Pixelhelligkeitswerte in diesem Volumenbereich höchster Tiefenschärfe überein.

Zur Erfassung und Identifikation der Objekte in diesem Volumenbereich wird bei Korrespondenz der Pixelamplituden das Summenbild der Photomischelemente durch eine kurzzeitig angelegte Modulationsgleichspannung bezüglich des Differenzbildes aufgeblendet, den eingestellten Entfemungsdaten zugeordnet und ausgewertet, während die nicht korrespondierenden Pixelamplituden im Differenzbild durch eine zu Null gesetzte Modulationsspannung $U_{ma} = U_{mb} = 0$ ausgeblendet bleiben.

Auf diese Weise wird durch Winkel-Scannen die 3D-Szene auch außerhalb der Reichweite der modulierten Senderbeleuchtung vermessen, wobei die erforderlichen Winkel sowohl durch entsprechende Verschiebung der PMD-Chips als auch durch Drehen der einzelnen Stereokameras und/oder durch Schwenken der gesamten Anordnung ereicht wird.

Die vielfältigen Anwendungsm öglichkeiten, von denen hier nur einige teils ausführlich beschrieben, teils nur knapp angedeutet worden sind, finden sich auch in der folgenden Auflistung, in der weitere Anwendungsm öglichkeiten angegeben sind, deren weitere Beschreibung den Rahmen der vorliegenden Anmeldung sprengen würde, wobei auch die folgende Auflistung keineswegs erschöpfend ist.

Im einzelnen sind Anwendungsm öglichkeiten auf den folgenden Gebieten denkbar und sinnvoll:

- Digitale 3D-Photokamera,
- Digitale 3D-Videokamera,
- Gefahrenraumüberwachung
- Sicherheitstechnik und "Intelligentes Haus",
- Insassendetektion- und Identifizierung im Automobil, "intelligenter Airbag",
- Elektronischer 3D-Rückspiegel,
- Erkennung der Verkehrssituation im Straßenverkehr
- Autonome Fahrzeugnavigation,
- Inkohärenter Faserkreisel und Dopplergeschwindigkeitsmessung,
- Steuerung autonomer Transportfahrzeuge,
- Industrielle Reinigungsroboter,
- Personenidentifikation, Authentifizierung, Kontrolle der Zugangsberechtigung,
- Identifikation von Objekten, zum Beispiel Fahrzeugen,
- Fertigungsüberwachung, Materialprüfung, 100%-Qualitätsprüfung,
- Elektronisches "3D-Auge" für die Roboterhand, robust, klein, All-Solid-State,
- Fahrzeug-Eigengschwindigkeits- und Streckenmessung, Straßenzustandserkennung, Verkehrsstauung,
- Gleisfreimeldung, Fahrdrahtüberwachung in der Bahntechnik,
- Medizintechnik, Endoskopie,
- CDMA-Technik für die optische Freiraum- oder Leitungskommunikation,
- Interaktive 3D-Kommunikation zum Beispiel im Multimediabereich,
- 3D-Vermessung bewegter Objekte mit einer Zeile aus Photomischelementen.

Dabei sind die folgenden Vorteile der Photomischelemente der vorliegenden Erfindung hervorzuheben (im folgenden abgekürzt als "PMD" für "Photonic Mixer Device").

1. PMD vereint: Detektion, Gegentaktmischung und Integration au kleinstem Raum 1/100 - 1/1000 $mm^2 \Rightarrow$ Elektrooptische Korrelation.

2. 2-fach/4-fach-PMD: Ersatz für 2 bzw. 4 aufwendige Breitbandverstärker mit hoher Dynamik und Gruppenlaufzeitkonstanz sowie für 2 bzw.4 elektronischen Mischer.

3. Die hohe elektronische Übersprechempfindlichkeit zwischen Sender und Empfänger entfällt.

4. Hohe Integrierbarkeit mit einigen 100.000 parallelen elektrooptischen Modulatoren.

5. Eine PMD-3D-Photo- oder Videokamera ist voll integrierbar, klein, leicht, robust und durch eine ZOOM-Optik für Lichtsender und Empfänger flexibel anpaßbar. Meßvolumen für natürliche Oberflächen, Entfernungen von ca. 20 cm bis 50 m bei Öffnungswinkeln von ca. 5° bis 50°.

6. Extrem schnelle 3D-Bildaufnahme im 10 Hz - 1000 Hz-Bereich. Empfindlichkeit und S/N-Verhältnis entsprechen heutigen CCD- bzw. CMOS-Kameras.

7. Die erwartete Tiefenauflösung beträgt etwa 0,5 mm bis 50 mm je nach Meßzeit, Beleuchtungsintensität, Optik und Abstand durch optimale Referenz.

8. Maximale Bandbreite je nach Pixelgröße bis in den GHz-Bereich.

9. Modulationsspannungen im Bereich kleiner 1 Volt.

10. Es wird kein kohärentes, polarisiertes oder schmalbandiges Licht benötigt und der Spektralbereich richtet sich nach dem lichtempfindlichen Material (z.B. bei InSb bis 5,5 μm).

11. Gleichzeitige Aufnahme des 3D-Tiefenbildes und des 2D-Grauwertbildes eröffnet durch Datenfusion eine optimierte Auswertung des 3D-Grauwertbildes (bzw. 3D-Farbbild).

12. Die Ausleseschaltung erlaubt durch intensitätsabhängige Variation der Integrationszeit $T_i$ eine Erhöhung der Dynamik um ca. 8 Bit (Faktor 256).

Die Erfindung wird im folgenden anhand von Ausführungsbeispielen näher erläutert, wobei auf die Zeichnung Bezug genommen wird. In der Zeichnung zeigt

Fig. 1      a) im Querschnitt eir. Pixel eines ersten Ausführungsbeispiels eines erfindungsgemäßen photonischen Mischelementes in CCD-Technologie sowie b) - f) die Potentialverteilung $U_S(t)$ für die verschiedenen Phasen bzw. Zeiten der beiden komplementären Modulationsphotogatesspannungen $U_{am}(t)$ und $U_{bm}(t)$,

Fig. 2      eine Blockbilddarstellung zweier linear angeordneter Pixel in CCD-Technologie einschließlich einem Teil einer Interline-Transfer-Auslesevorrichtung,

Fig. 3      im Diagramm die Intensitätsverteilung des eingestrahlten Lichtes und die Potentialverläufe der Spannungen $U_{sep}(t)$, $U_a(t)$, $U_{am}(t)$, $U_{bm}(t)$ und $U_b(t)$ im Falle einer HF-Modulation,

Fig. 4      im Diagramm die Charakteristik des Misch- und Korrelationsergebnisses des photonischen Mischelements in Form der gemittelten zu den Akkumulationsgates driftenden photogenerierten Ladungsträgerströme $\bar{i}_a$ und $\bar{i}_b$ bei einer HF-Modulation in Abhangigkeit von der relativen Phasen- bzw. Laufzeitverschiebung $\varphi_{opt} = \omega_m\,\tau$,

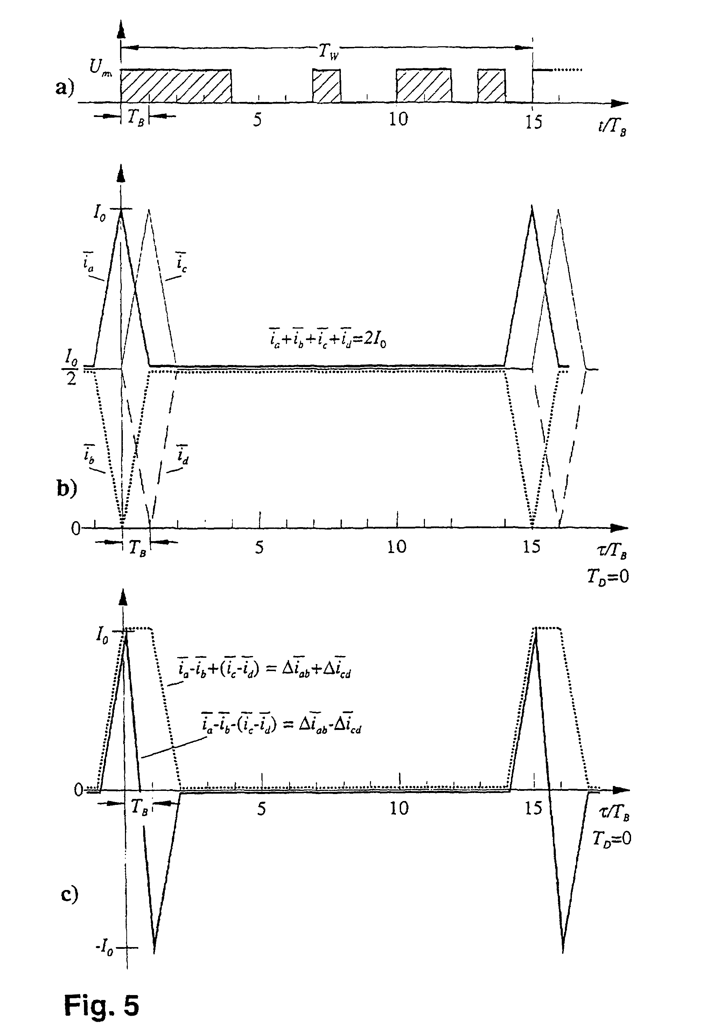

Fig. 5      im Diagramm für eine PN-Modulation a) das Modulationssignal, b) die Charakteristik des Misch- und Korrelationsergebnisses sowohl für eine Zweifachpixel (nur $\bar{i}_a$ und $\bar{i}_b$) als auch für ein Vierfachpixel mit $\bar{i}_c$ und $\bar{i}_d$ bei einer Verzögerung des Modulationssignals für das 3. und 4. Modulationsgate cm und dm von $T_B$ sowie c) die für die Entfernungsauswertung relevanten Differenzwerte $\Delta\bar{i}_{ab} + \Delta\bar{i}_{cd} = \bar{i}_a - \bar{i}_b + (\bar{i}_c - \bar{i}_d)$ und $\Delta\bar{i}_{ab} - \Delta\bar{i}_{cd} = \bar{i}_a - \bar{i}_b - (\bar{i}_c - \bar{i}_d)$,

Fig. 6      a) im Querschnitt ein Pixel eines zweiten Ausführungsbeispiels in CCD-Technologie eines erfindungsgemäßen photonischen Mischelementes mit einem mittleren Modulationsphotogate $G_0$ sowie die Potentialverteilungen unter den Modulationsphotogates und Akkumulationsgates b) für eine positive und c) für eine negative Modulationsspannung $U_m(t)$,

Fig. 7      a) im Querschnitt ein Pixel eines dritten Ausführungsbeispiels eines erfindungsgemäßen photonischen Mischelementes sowie b) - f) die Potentialverteilungen für die verschiedenen Phasen analog zu Fig. 1,

Fig.8      in einer Draufsicht ein Pixel eines vierten Ausführungsbeispiels eines erfindungsgemäßen photonischen Mischelementes mit vier Modulationsphotogates und vier Akkumulationsgates, als Vierfachpixel bezeichnet,

Fig.9      in einer Draufsicht ein Pixel eines fünften Ausführungsbeispiels eines erfindungsgemäßen photonischen Mischelementes mit vier Modulationsphotogates und vier Akkumulationsgates und einem zentralen symmetrischen mittleren Gate $G_0$,

Fig. 10      eine schematische Darstellung einer aus dem Stand der Technik bekannten Vorrichtung zur Bestimmung der Phasen- und Amplitudeninformation einer Lichtwelle,

Fig. 11      eine schematische Darstellung einer erfindungsgemäßen Vorrichtung zur Bestimmung der Phasen- und Amplitudeninformation einer Lichtwelle für HF-Modulation,

Fig. 12      eine schematische Darstellung einer erfindungsgemäßen Vorrichtung zur Bestimmung der Phasen- und Amplitudeninformation einer Lichtwelle z.B. für PN-Modulation oder Rechteckmodulation,

Fig. 13      a) im Querschnitt ein Pixel eines sechsten Ausführungsbeispiels eines erfindungsgemäßen photonischen Mischelementes mit Pixelauslese- und -vorverarbeitungselektronik in CMOS-Technologie sowie b) und c) die Potentialverteilung analog zu Fig. 6 für zwei Phasen bzw. Polaritäten der Modulationsphotogatespannung und

Fig. 14      in einer Draufsicht ein Pixel eines siebten Ausführungsbeispiels eines erfindungsgemäßen photonischen Mischelementes mit vier Modulationsphotogates, vier Akkumulationsgates sowie einem kreuzförmig ausgestalteten mittleren Gate $G_0$, vorzugsweise für digitale Modulation.

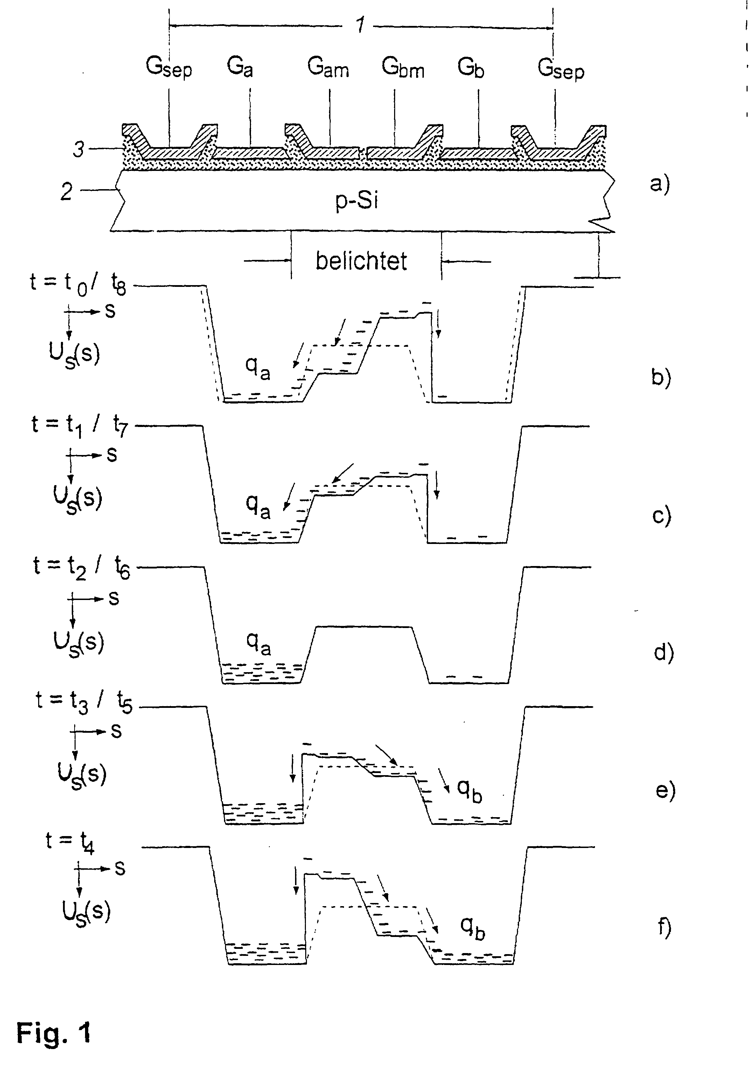

Fig. 1a zeigt den Querschnitt eines einzelnen Pixels 1 eines photonischen Mischelementes am Beispiel einer CCD-Struktur. Dabei umfaßt das photonische Mischelement neben dem Pixel 1 die für die Spannungsversorgung und die Signalableitungen notwendigen Strukturen. Die äußeren Gates $G_{sep}$ dienen lediglich zur elektrischen Abgrenzung dieses Pixels gegenüber benachbarten Strukturen.

Die in Fig. 1 gezeigte Ausführung ist auf einem p-dotierten Siliziumsubstrat 2 ausgeführt. Der Misch- oder Multiplikationsvorgang des vorgeschlagenen Konzepts sei zunächst für reine CW-Hochfrequenzmodulation betrachtet.

Bezogen auf den Querschnitt zeigt Fig. 1b-f schematisch die Potentialverteilungen für verschiedene Phasen des Mischprozesses. Die mittleren Modulationsphotogates $G_{am}$ und $G_{bm}$ stellen den lichtsensitiven Teil dar und befinden sich im Inversionszustand. Zusätzlich zu einer positiven Vorspannung $U_0$ an der leitfähigen aber optisch teiltransparenten oberen Abdeckung z.B. aus Poly- Silizium werden sie mit den überlagerten Gegentaktspannungen $U_m(t)$ betrieben. Es ergeben sich die Modulationsspannungen $U_{am}(t) = U_0 + U_m(t)$ bzw. $U_{bm}(t) = Uo - Um(t)$.

Diese verursachen multiplikativ eine Separierung der durch die Photonen der einfallenden Lichtwelle in der Raumladungszone erzeugten Minoritätsladungsträger unmittelbar unterhalb der Isolatorschicht 3, z.B. aus Siliziumoxyd oder Siliziumnitrid. Diese Ladungsträger (im Beispiel Elektronen) driften unter dem Einfluß der modulierenden Gegentaktspannung zu den eng benachbarten positiven Akkumulationsgates $G_a$ oder $G_b$ und werden dort aufintegriert während die Majoritätsladungsträger bzw. Löcher zum Masseanschluß des p-Si-Substrats fließen. Auch eine rückwärtige Beleuchtung ist möglich.

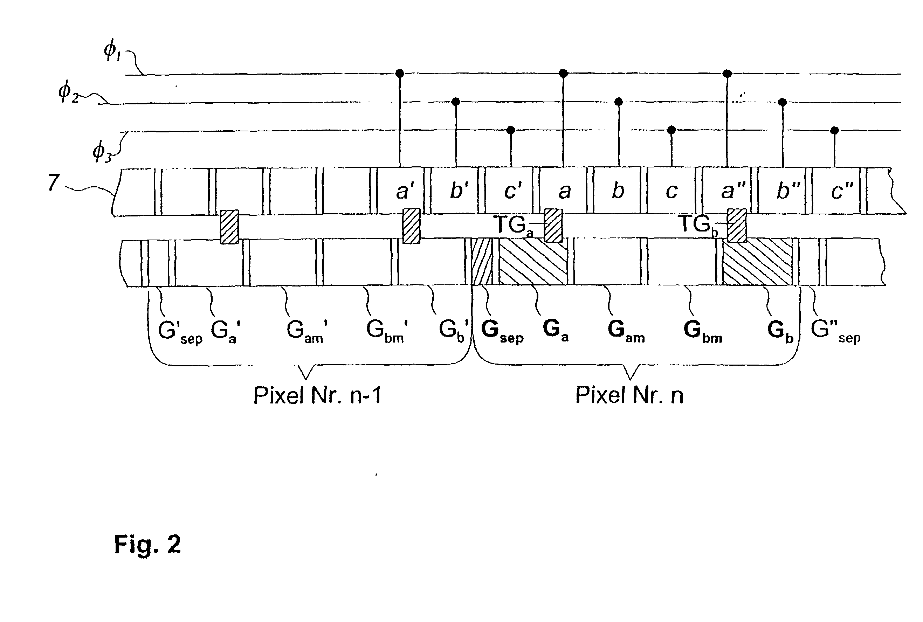

Fig. 2 zeigt eine Aufsicht von zwei Pixeln 1 des erfinderischen photonischen Mischelementes einschließlich eines Teils einer Interline-Transfer-Auslesevorrichtung 7 in Form eines 3-Phasen-CCD-Schieberegisters, an dessen einem Ende sich die Ausleseelektronik mit einem Diffusionsübergang für die serielle Weiterverarbeitung der durch die Korrelation gewonnen Ladungswerte befindet. Nach einer vorgebbaren Zeit T für die Ladungsakkumulation unter allen Akkumulationsgates der Zeile werden z.B. bei Pixel Nr. n die Ladungen $q_a$ und $q_b$ unter Ga und $G_b$ über das Transiergate $TG_a$ bzw. $TG_b$ auf das 3-Phasen-Ausleseschieberegister gegeben. Die begrenzenden Separationsgates $G_{sep}$ schirmen das Korrelationspixel gegen unerwünschte äußere Einflüsse ab und liegen vorzugsweise auf Massepotential.

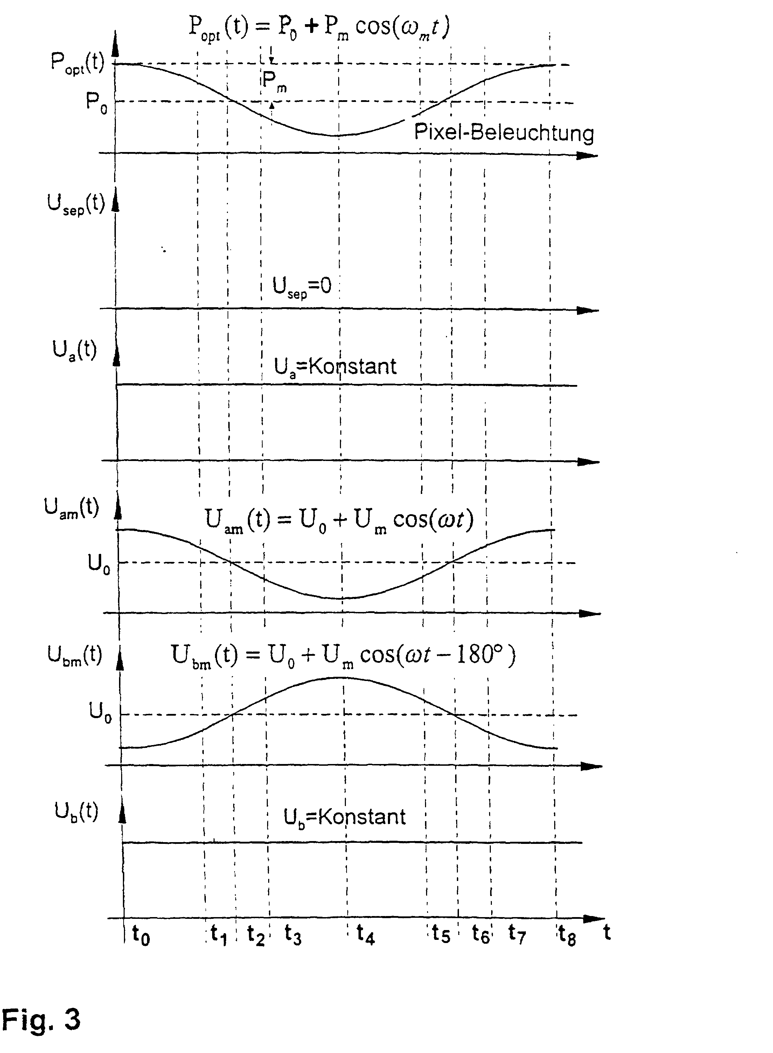

In Fig. 3 sind die zu Fig. 1 gehörenden Sannungsverläufe dargestellt. Die Modulationsphotogates $G_{am}$ und $G_{bm}$ werden mittels der in Fig. 3 dargestellten Modulationsphotogatespannungen, die eine gegenphasige HF-Modulationsspannung $U_m(t)$ enthalten, angesteuert, die wie folgt beschrieben sind:

$$U_{am} = U_0 + U_m\cos(\omega_m t) \tag{1a}$$

und

$$U_{bm} = U_0 + U_m\cos(\omega_m t - 180°) = U_0 - U_m\cos(\omega_m t) \tag{1b}$$

In Fig. 1b-f ist die Potentialverteilung $U_S(s)$ in der Raumladungszone über der räumlichen Ausdehnung s eines repräsentativen Pixels 1 für alle beteiligten Gates dieses Pixels in der zeitlichen Sequenz von $t_0$ bis ts für die Dauer einer Periode $T_m$ des HF-Modulationssignals anschaulich dargestellt. An den Akkumulationsgates $G_a$ und $G_b$ sorgt eine relativ hohe positive Spannung für die Ansammlung der photogenerierten Ladungsträger, nachdem diese nach Maßgabe und Polarität der Modulationsphotogatespannungen $U_{am}(t)$ und $U_{bm}(t)$ entweder vorwiegend zur linken oder zur rechten Seite des in Fig. 1 im Querschnitt gezeigten Pixels 1 gedriftet sind. Dieser Vorgang wirkt sich dann in besonderer Weise aus, wenn die Lichtmodulation und die Modulationsphotogatespannung $U_{am}(t)$ die gleiche Frequenz aufweisen. Dann entsteht je nach der Phasendifferenz $\varphi_{opt}$ eine mittlere Vorzugsrichtung der Ladungsträgerdrift zu den Akkumulationsgates $G_a$ und $G_b$. Die zugehörigen gemittelten Ströme werden durch $\bar{i}_a$ und $\bar{i}_b$ beschrieben.

Der zugrundeliegende Korrelationsprozeß kann mathematisch so beschrieben werden: In der Empfangsebene des im allgemeinsten Fall 2D-Arrays photonischer Mischelemente ist z = 0 und die einfallende modulierte Lichtwelle wird dort allgemein durch $P_{opt}(x,y,t-\tau)$ beschrieben. Hier wird sie über die photogenerierten Ladungsträger mit dem dort wirkenden Gegentakt-Modulationssignal, in allgemeiner Form durch $U_m(x,y,t)$ beschrieben, bezüglich der Ladungsdifferenzen der beiden Akkumulationsgates annähernd multiplikativ und integrativ verknüpft. Die entsprechende Korrelationsfunktion $\varphi Um,Popt(x,y,t)$ wird z.B. für alle gemittelten Differenzen der Ladungsträgerdrifts $\Delta q_{ab} / T = \Delta\bar{i}_{ab} = \bar{i}_a - \bar{i}_b$ (mit T = Integrationszeit) zu den Akkumulationsgates $G_a$ und $G_b$ im allgemeinsten Fall ortsabhängig als Dreifachfaltung beschrieben:

$$\varphi_{U_m \cdot P_{opt}}(x,y,\tau) = k_1 \cdot U_{um}(-x,-y,-\tau) *** P_{opt}(x,y,\tau) = k_2 \cdot \Delta\bar{i}_{ab}(x,y,\tau) \tag{2}$$

mit der Laufzeitdifferenz $\tau = \varphi_{opt}/\omega_m$, der Modulationskreisfrequenz $w_m$ und den strukturabhängigen, jedoch für das Funktionsprinzip unwesentlichen Konstanten $k_1$ und $k_2$.

Das erfindungsgemäße photonische Mischelement löst diese Aufgabe mit hoher Orts- und Zeitauflösung durch den schnellen separierenden Ladungstransport der Photoelektronen und deren Gegentaktspeicherung und Differenz- und Summenauswertung. Durch Differenzbildung der gemittelten Driftströme $\Delta\bar{i}_{ab}(t) = \bar{i}_a(t) - \bar{i}_b(t)$, die bei nichtstationären Lichtwellen zeitabhängig sind, werden dabei alle störenden Offset-Anteile unterdrückt und zugleich wird die gewünschte Korrelationsfunktion des Lichtsignals $P_{opt}(t-\tau)$ mit der Modulationsspannung $U_m(t)$ gebildet.

Dieser Vorgang soll im einzelnen näher beschrieben werden. Das über $U_{am}(t)$ und $U_{bm}(t)$ verursachte HF-Driftfeld bewirkt, daß die Elektronen zu der jeweilig positiven Seite driften. Während z.B. der positiven Halbwelle der Modulationsphotogatespannung $U_{am}(t)=U_0+U_m(t)$, d.h., während der negativen Halbwelle von $U_{bm}(t)=U_0-U_m(t)$, werden die photogenerierten Ladungsträger zum Akkumulationsgate $G_a$ driften und dort als Ladungsmenge $q_a$ angesammelt bzw weitergeleitet (vergleiche die beiden oberen Modulationsphotogatespannungsverteilungen in Fig. 1b und c). In Fig. 3 ist für den Fall einer stationären, harmonisch modulierten Beleuchtung die optische Leistung pro Pixel dargestellt als

$$P_{opt}(t\text{-}\tau) = P_0\text{-}P_m\cos(\omega t - \varphi_{opt}) \qquad (3)$$

wobei $P_0$ den Mittelwert inklusive der Hintergrundbeleuchtung, $P_m$ die Modulationsamplitude, $\omega_m$ die HF-Modulations-frequenz, $\varphi_{opt}$ die Phasenverzögerung und $\tau = \varphi_{opt}/\omega_m$ die entsprechende Laufzeitverzögerung der einfallenden Lichtwelle gegenüber der Modulationsphase an $G_{am}$ repräsentiert. Der gesamte erzeugte Photostrom pro Pixel ist

$$i(t) = S_\lambda \cdot P_{opt}(t - \tau) = S_\lambda \cdot \left[ P_0 + P_m \cdot \cos(\omega_m t - \varphi_{opt}) \right] \qquad (4)$$

$$i(t) = I_0 + I_m \cdot \cos(\omega_m t - \varphi_{opt}) \qquad (5)$$

mit den Größen $i(t)= i_a(t) + i_b(t)$, $I_0$ = Mittelwert des Pixelphotostroms gemäß $P_0$, $I_m$ = Wechselamplitude des modulierten Photostroms gemäß $P_m$, und $S_\lambda$= Spektrale Empfindlichkeit. Dieser gesamte Photostrom pro Pixel ist in zwei Anteile aufgeteilt und zwar in den Strom $i_a(t)$ des Akkumulationsgates $G_a$ und in den Strom $i_b(t)$ des Akkumulationsgates $G_b$. Da diese Werte aufintegriert werden - in CCD-Technologie unter den jeweiligen Akkumulationsgates $G_a$ und $G_b$ und bei der pixelweise auslesenden CMOS-Technologie vorzugsweise in der Ausleseelektronik - genügt es, im folgenden die Mittelwerte $\bar{i}_a$ und $\bar{i}_b$ dieser Ströme zu berücksichtigen. Das Maximum der Ladungsseparation wird für den Winkel $\varphi_{opt} = 0$ bzw. $\tau = 0$ erreicht. Dieser Fall ist in Fig. 3 dargestellt.

Bei harmonischer Modulation ergibt sich unter der Voraussetzung idealisierter Bedingungen wie geeigneter Modulationsamplitude, vernachlässigbarer Driftlaufzeiten, 100%-Modulationstiefe mit $P_m = P_0$ für die mittleren Photo-ströme $\bar{i}_a$ bzw. $\bar{i}_b$

$$\bar{i}_a = \frac{I_0}{2} + \frac{I_m}{\pi}\cos(\varphi_{opt}) \qquad (6)$$

$$\bar{i}_b = \frac{I_0}{2} - \frac{I_m}{\pi}\cos(\varphi_{opt}) \qquad (7)$$

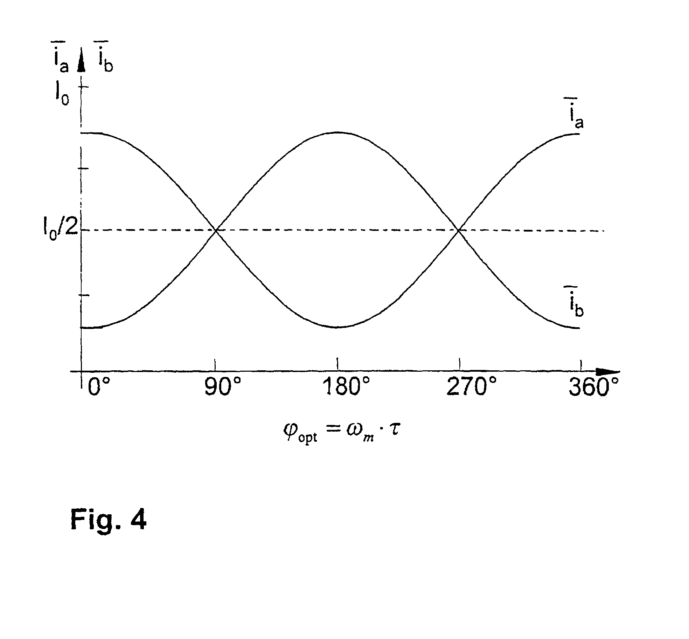

In Fig. 4 ist der Verkauf dieser idealisierten mittleren Pixelströme gezeigt. Sie repräsentieren die gegenphasigen Korrelationfunktionen, die aus den HF-modulierten Empfangslicht und den an den Modulationsphotogates $G_{am}$ und $G_{bm}$ angelegten HF-Modulationsphotogatespannungen resultieren. Ihre Summe entspricht mit $I_0$ der mittleren Pixellichtleistung $P_0$. Die gesamte Ladungsmenge, die über der Zeit $T = N*T_m$ (d.h., über N Perioden $T_m$ der HF-Mo-dulationsspannung) angesammelt wird, ergibt sich zu

$$\bar{i}_a(\tau) \cdot T = q_{a\tau}(\tau) = \frac{I_0}{2} + const.\int_0^T P_{opt}(t\text{-}\tau)\cdot U_m(t)\cdot dt \qquad (8)$$

mit einer der Phasenverzögerung entsprechenden Laufzeit $\tau=\varphi_{opt}/\omega_m$. Im folgenden wird $q_{aT}$ nur noch mit $q_a$ bezeichnet. Die Gesamtheit der Ladungen der Akkumulationsgates $G_a$ bzw. $G_b$ aller Pixel 1 formt zwei ortsdiskrete HF-Interferogramme, das a-Interferogramm bzw. das um 180° gegenüber dem a-Interferogramm verschobene b-Interferogramm, aus denen durch Differenzbildung das laufzeitbestimmte und gesuchte Differenz-HF-Interferogramm gebildet wird, das durch Gleichung (2) beschrieben wird.

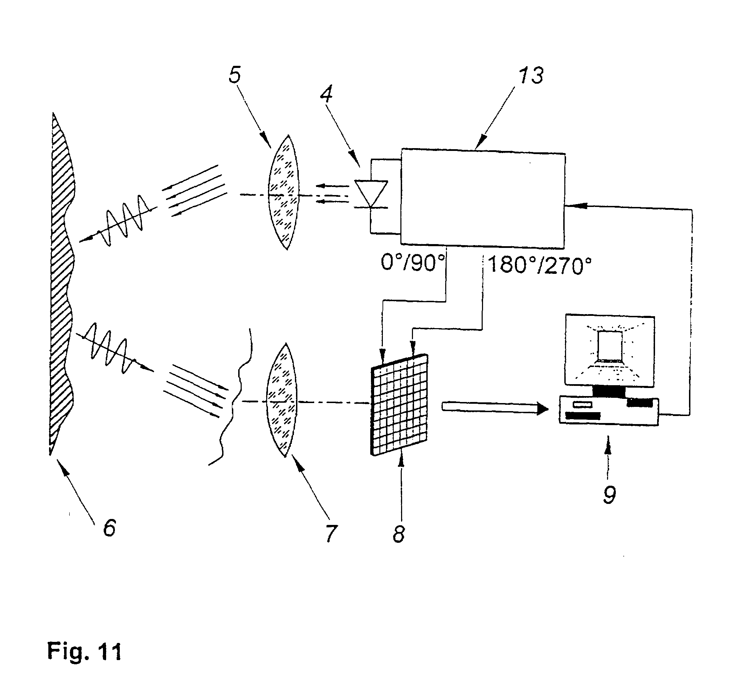

In Fig. 11 ist das Schema einer erfindungsgemäßen 3D-Kamera gezeigt, das die direkte Mischung auf der Basis eines Arrays photonischer Mischelemente nutzt. Verglichen mit dem aus dem Stand der Technik bekannten 3D-Kamerakonzept, daß in Fig. 10 dargestellt ist, wird in Fig. 11 die Modulation eines Senders 4 für eine Beleuchtung optisch passiver 3D-Objekte durch die Direktmodulation des Stroms einer Laserdiode realisiert. Dabei wird die Modulation durch einen HF-Generator 13 erzeugt. Für größere Abstände ist z.B. der Einsatz eines leistungsstarken Laserdiodenarrays mit vorzugsweise gemeinsamem Modulationsstrom und - zur Augensicherheit - mit unterschiedlichen Wellenlängen vorteilhaft.

Eine erste Optik 5 bildet die Lichtwelle auf die Oberfläche eines Objektes 6 ab. Die vom Objekt 6 reflektierte Lichtwelle wird dann durch eine zweite Optik 7 auf die Oberfläche eines photonischen Mischelementarrays 8 abgebildet.

Das photonische Mischelementarray 8 wird ebenfalls durch den HF-Generator 13 angesteuert, wobei die Ansteuerung für unterschiedliche Phasenverschiebungen zur Phase der abgestrahlten Lichtwelle durch den HF-Generator 13 erfolgt. Die Signale des photonischen Mischelementarrays 8 werden, soweit nicht bereits on-chip geschehen, schließlich von einer Auswerteeinheit 9 ausgewertet.

Aufgrund der erfindungsgemäßen Meßvorrichtung ist für das vorgeschlagene 3D-Kamerakonzept neben dem erfindungsgemäßen photonischen Mischelementarray kein zusätzlicher optischer Modulator mit hoher Apertur notwendig, was zu einer wirtschaftlich vorteilhaften Lösung führt.

Zur Bestimmung der Pixelphase $\varphi_{opt}$ aus den resultierenden Korrelationsamplituden werden wie zuvor angegeben insgesamt vier verschiedene Interferogramme bei vier verschiedenen Phasen des Mischersignals herangezogen. Die vier Phasen des Mischersignals ergeben sich für den Fall, daß die Modulationsphotogatespannungen $U_{am}$ und $U_{bm}$ vom Zustand des Phasenverhältnisses 0°/180° auf den Zustand 90°/270° umgeschaltet bzw. um 90° verzögert werden. Auf diese Weise erhält man die beiden zugehörigen Imaginär- bzw. Quadratur-Komponenten zu den Real- bzw. Inphase-Komponenten, woraus die gesuchte Pixelphase gemäß der unten beschriebenen Gleichung (10) berechnet werden kann.

Diese Vorgehensweise ermöglicht gleichzeitig die Eliminierung von störenden Offset-Spannungen, die durch die Hintergrundhelligkeit und durch den Mischvorgang erzeugt werden.

Neben dem beispielhaft beschriebenen Meßvorgang von CW-modulierten 3D-Lichtwellen durch 2D-Korrelation mit einer Modulationsspannung $U_m(x,y,t)$ vorzugsweise gleicher Frequenz in der Ebene des photonischen Mischelementarrays kann die erfindungsgemäße Meßvorrichtung auch mit pulsförmigen Modulationssignalen vorteilhaft eingesetzt werden.

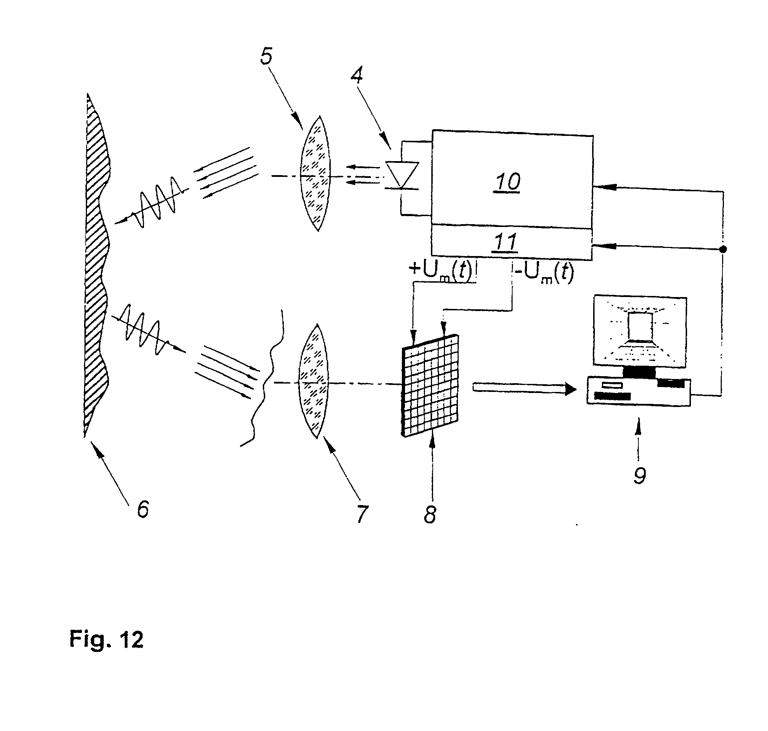

Für Aufgaben der hochpräzisen Laufzeitmessung von 3D-Lichtwellen ist insbesondere eine Pseudo-Rausch-Modulation des Lichts vorteilhaft. Eine beispielhafte Ausführung zur Vermessung optisch passiver 3D-Objekte zeigt Fig. 12. Die erfindungsgemäße Vorrichtung weist ähnlich dem Ausführungsbeispiel mit harmonischer Modulation in Fig. 11 eine entsprechende Beleuchtungseinrichtung auf, die die 3D-Objekte 6 mit in der Intensität PN(Pseudo-Noise)-moduliertem Licht beleuchtet und das reflektierte und empfangene Licht dem Korrelationsprozeß mit vorzugsweise dem entsprechenden PN-Modulationssignal, das vom Generator 13 erzeugt wird, unterzieht.

Da die Korrelation derartiger PN-Signale mit zunehmender Wortlänge $T_W=T_B(2^N-1)$ einem dreieckförmigen Nadelimpuls mit einer Halbwertsbreite gleich der Bitbreite $T_B$ ähnelt, muß zur eindeutigen und vollständigen Vermessung des ganzen Lichtvolumens bzw. des ganzen beleuchteten Raumes eine relative Verzögerung $T_D$ zwischen dem lichtmodulierenden PN-Signal und der demodulierenden PN-Gegentaktspannung $U_m(t)$ der gleichen Signalform an den Modulationsphotogates mindestens einmal den ganzen Verzögerungsbereich der maximalen Echolaufzeit kontinuierlich oder schrittweise in $T_B$-Schritten durchlaufen. Dazu dient das von der Steuerungs- und Auswerteeinheit 9 bezüglich der Verzögerung $T_D$ einstellbare Verzögerungsglied 11.

In Fig. 5a ist am Beispiel einer rechteckförmigen 15Bit-PN-Sequenz das Modulationssignal $U_m(t)$ dargestellt. Das Ergebnis der Korrelation durch das photonischen Mischelement sind die in Fig. 5b über der relativen Verzögerung $\tau$ dargestellten gemittelten Driftströme $\overline{i}_a$ und $\overline{i}_b$.

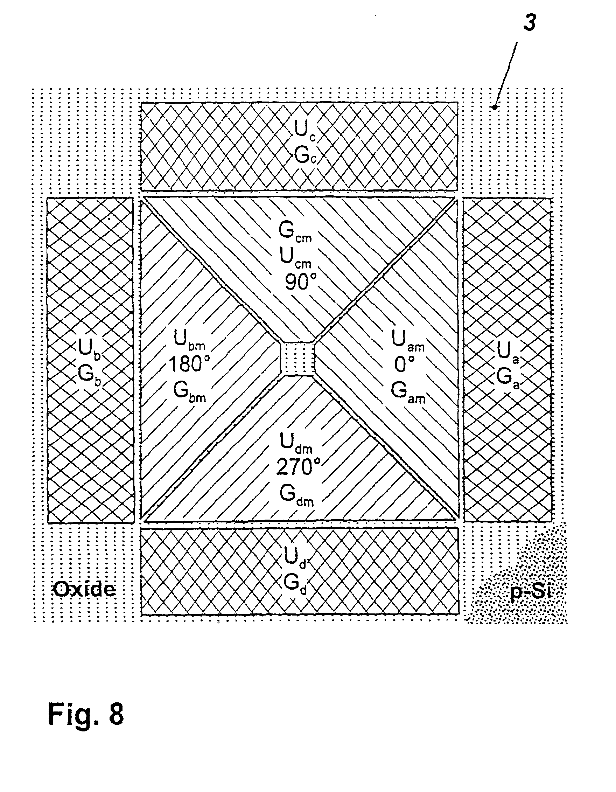

Beim später beschriebenen Vierfachpixel gemäß Fig. 8, Fig. 9 und Fig. 14 sind die an den Modulationsphotogates $G_{cm}$ und $G_{dm}$ anliegenden und der Vorspannung $U_0$ überlagerten Gegentakt-Modulationsphotogatespannungen vorzugsweise um $T_B$ gegenüber den an den Modulationsphotogates Ga und Gb anliegenden Gegentakt-Modulationsphotogatespannungen verzögert, d.h. $U_{cm}(t)=U_0+U_m(t-T_B)$ und $U_{dm}(t)=U_0-U_m(t-T_B)$, was zu sehr vorteilhaften Amplituden- und Laufzeitmessungen führt.

Bis auf eine vorgebbare Verzögerung $T_D$ der Modulationsspannungen weist die vom Sender 4 abgestrahlte Lichtintensität const.*$P_{opt}(t)$ die gleiche PN-Signalstruktur auf. Die Reflexion erreicht das photonische Mischelement nach der Echolaufzeit. Die Korrelation mit den Gegentaktmodulationsspannungen führt je nach der relativen Laufzeit-

verzögerung $\tau$ für $T_D$=0 im Idealfall ohne Hintergrundhelligkeit beim Zweifachpixel auf die in Fig. 5b gezeigten mittleren Pixelströme $\bar{i}_a$ und $\bar{i}_b$ und beim Vierfachpixel mit dem genannten $T_B$-Zeitversatz zusätzlich auf die mittleren Pixelströme $\bar{i}_c$ und $\bar{i}_d$. Diese Korrelationscharakteristik offenbart zunächst, daß mehrere Objektreflexionen auf dem gleichen Radiusvektor unterschieden werden können, z.B. zur Unterscheidung mehrerer hintereinander stehender teiltransparenter Objekte oder zur Elimination von Mehrfachreflexionen.

Zusätzlich werden beim Zweifachpixel nacheinander und beim Vierfachpixel gleichzeitig vorzugsweise in der jeweils entsprechenden Pixelauslese- und Signalvorverarbeitungselektronik 15 die in Fig. 5c dargestellte Summe und Differenz der mittleren Driftstromdifferenzen gebildet. Sie erlauben hochempfindliche Messungen, da nur in dem $T_B$ bis $2T_B$ breiten Meßfenster Signalwerte ungleich Null erscheinen. Durch die Auswertung der Summe wird die Relevanz einer Messung aufgrund einer Mindestamplitude bestimmt. Die Differenz zeigt einen steilen linearen Verlauf im nutzbaren $T_B$-breiten Meßfenster, der eine Laufzeitbestimmung mit hoher Auflösung erlaubt. Für das hier idealisierte Beispiel ist

$$\tau = T_D + \frac{T_B}{2} - \left[ \frac{\Delta \bar{i}_{ab} - \Delta \bar{i}_{cd}}{\Delta \bar{i}_{ab} + \Delta \bar{i}_{cd}} \right] * \frac{T_B}{2} \qquad (9)$$

Das Blockschaltbild einer entsprechenden Meßvorrichtung zur optischen Vermessung von 3D-Objekten mit PN-Modulation auf der Basis des vorgeschlagenen Korrelations-Photodetektorarrays ist durch einen besonders einfachen Aufbau charakterisiert, wie in Fig. 12 veranschaulicht ist. Außer dem Generator 10 und dem Verzögerungsglied 11 ist dabei der gleiche Aufbau wie in Fig. 11 gegeben.

Zur schnellen Entfernungsbestimmung bei geringerer Auflösung wird erfindungsgemäß auch eine einfache Rechteckmodulation des Senders 4 durch den Generator 10 mit der Periode T und vorzugsweise gleicher Puls- und Pausendauer $T_B$ verwendet. Die Laufzeitermittlung erfolgt nach Gleichung (9). Die Auflösung wird schrittweise durch die mit dem Faktor 2 abnehmende Periodendauer T erhöht, wobei auf den ersten Meßschritt zunächst ein zweiter mit gleicher Periode aber einer Zeitverschiebung $T_D$ = T/4 erfolgt.

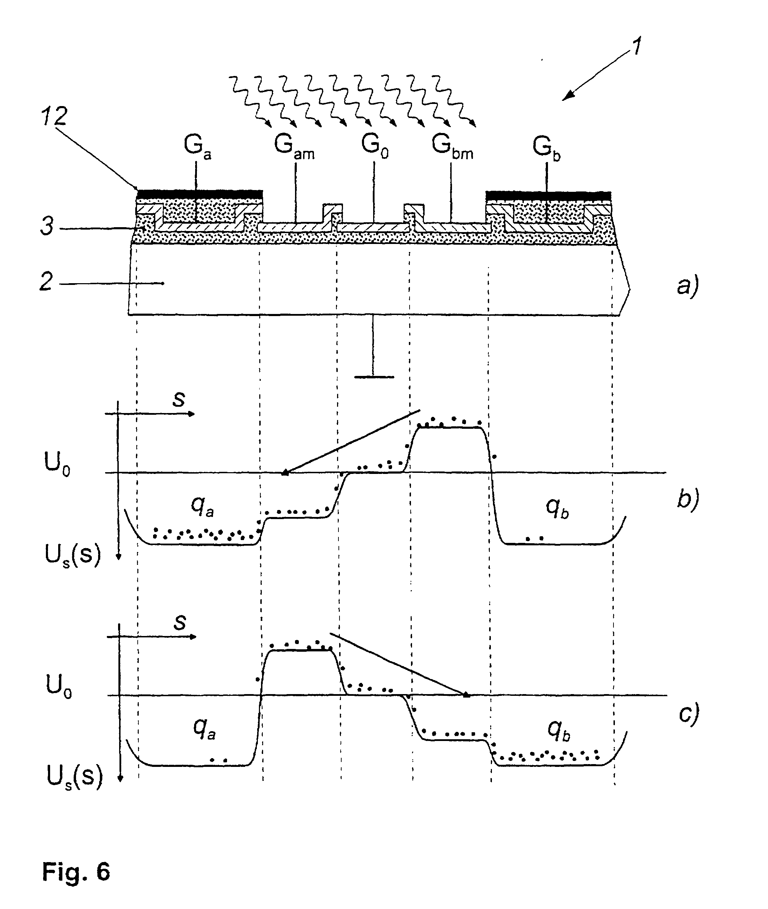

Der in Fig. 1 beispielhaft dargestellte Querschnitt des Pixels 1 des erfindungsgemäßen photonischen Mischelementes kann bezüglich seiner Grenzfrequenz durch eine geeignete Auslegung des durch die Gegentaktmodulationsspannung verursachten Potentialgefälles optimiert werden. Hierzu zeigt Fig. 6 ein Ausführungsbeispiel, bei dem ein mittleres Gate Go zwischen den Modulationsphotogates $G_{am}$ und $G_{bm}$ angeordnet ist, das vorzugsweise auf der Vorspannung $U_0$ liegt, und das zusammen mit den Modulationsphotogates $G_{am}$ und $G_{bm}$ drei Potentialstufen bildet. Erwünscht ist ein möglichst gleichmäßiges Potentialgefälle bzw. ein möglichst konstantes Modulationsdriftfeld, was durch Erhöhung der Stufenzahl von zwei auf drei oder auch mehr erreicht wird. In der photosensitiven Raumladungszone nimmt mit dem Abstand von der Isolierschicht 3 ohnehin die Ausprägung der Stufen ab. Dieser Effekt wird in einer weiteren erfindungsgemäßen Ausführung genutzt, und zwar durch Verwendung eines sogenannten "Buried Channel", eines von der Isolierschicht einige $\mu$m entfernten, etwas tiefer im -Substrat unter den Modulationsphotogates liegenden, schwach dotierten n-Kanals. Weiterhin ist eine Abschattung 12 für die Akkumulationsgates $G_a$ und $G_b$ vorgesehen, damit diese nicht von der Lichtwelle beleuchtet werden und zusätzliche Ladungsträger erzeugt werden.

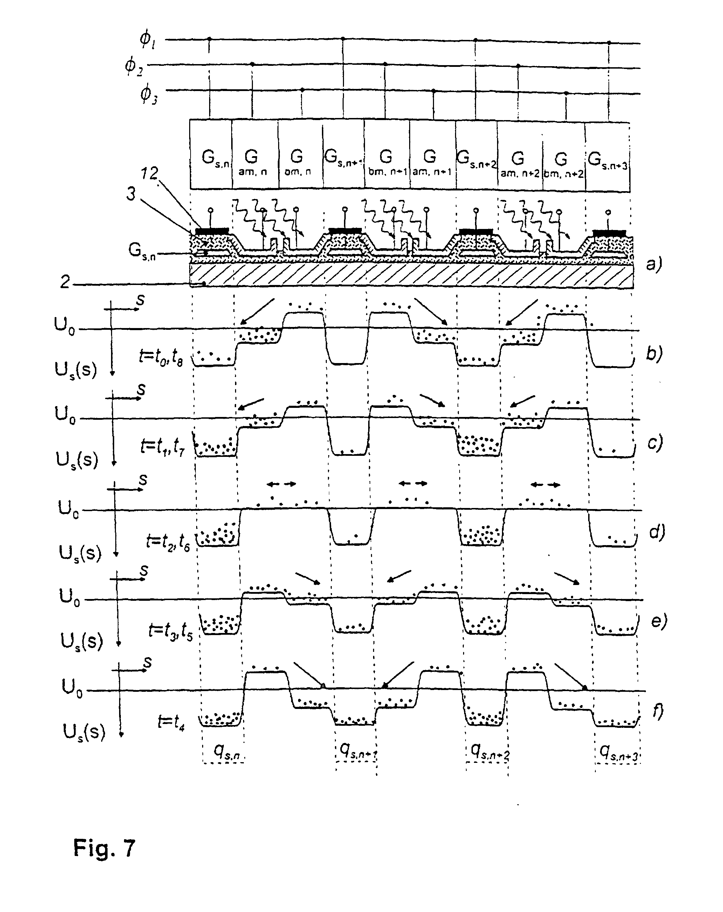

Fig. 7 zeigt eine besondere Ausführung und Verbindung photonischer Mischelemente, bei der gegenüber der in Fig. 1 die beiden Modulationsphotogates jeweils nur durch ein gemeinsames Akkumulationsgate $G_{s,n}$ getrennt sind, wodurch ein höherer Füllwirkungsgrad erreicht wird. Auch hier ist eine Abschattung 12 der Akkumulationsgates $G_a$ und $G_b$ vorgesehen. Dabei wechselt die Polarität der Gegentaktmodulationsspannungen bzw. die Reihenfolge von $G_{am,n}$ und $G_{bm,n}$ von Pixel zu Pixel. Diese Dreierperiode der Gates eignet sich zugleich zum direkten Auslesen durch einen Betrieb als Drei-Phasen-Schieberegister. Ein in bestimmten Anwendungen tolerierbarer Nachteil liegt in der Ladungsverteilung auch auf die jeweils benachbarten Pixel, die zu einer scheinbaren Pixelvergrößerung und geringerer Ortsauflösung in der betreffenden Richtung führt.

Eine Berechnung dieser Zusammenhänge ergibt, daß gegenüber einer 100%-Nutzladung bei der Auswertung der Ladungsdifferenzen das zentrale, betrachtete Pixel nur 50% erhält und die beiden Nachbarpixel jeweils 25 % erhalten.

Zur Veranschaulichung der Ladungsverteilung sind in Fig. 7 analog zu Fig. 1 die verschiedenen Phasen der Potentialverteilung für CW-Modulation dargestellt.

In Fig. 8 ist eine weitere vorteilhafte Ausführung des Designs eines Pixels eines photonischen Mischelementes dargestellt, das bei CW-Modulation keine IQ (Inphase, Quadraturphase)-Umschaltung zwischen den I- und Q-Zuständen benötigt. Anstelle des zuvor beschriebenen Zweifachpixels wird ein Vierfachpixel mit den Modulationsphotogates $G_{am}$, $G_{bm}$, $G_{cm}$ und $G_{dm}$ sowie den zugehörigen Akkumulationsgates $G_a$, $G_b$, $G_c$ und $G_d$ vorgeschlagen, das die Korrelation gleichzeitig für vier Phasenlagen ermöglicht, da die Gegentakt-Modulationsphotogatespannungen $U_{am}(t)$ und

$U_{bm}(t)$ bzw $U_{cm}(t)$ und $U_{dm}(t)$, insbesondere bei HF-Modulation um 90°, gegeneinander verschoben sind.

In orthogonaler Anordnung zu den beschriebenen Modulationsphotogates $G_{am}$ mit $\varphi_{am}$ = 0° und $G_{bm}$ mit $\varphi_{bm}$ = 180° befinden sich daher zwei weitere innerhalb des Pixels symmetrisch integrierte Modulationsphotogates $G_{cm}$ mit $\varphi_{cm}$ = 90° und $G_{dm}$ mit $\varphi_{dm}$ = 270°, die nach dem gleichen Prinzip arbeiten. Auf diese Weise entsteht eine Vierphasen-Ladungsakkumulation mit den Einzelladungen $q_a$, $q_b$, $q_c$ und $q_d$ unter den zugehörigen Akkumulationsgates $G_a$, $G_b$, $G_c$ und $G_d$ oder in der zugehörigen Ausleseelektronik, wobei mittels einer einfachen arithmetischen Operation die zugehörige Phase $\varphi_{opt}$ folgendermaßen direkt berechnet wird:

$$\varphi_{opt} = \arctan\frac{q_c - q_d}{q_a - q_b} \qquad (10)$$

Für die einfache Grauwertbestimmung eines einzelnen Pixels werden die Einzelladungen aller Akkumulationsgates eines Pixels aufsummiert: $q_{Pixel} = q_a + q_b + q_c + q_d$. Der Ausleseprozeß der jeweils vier Ladungen wird in diesem Fall zweckmäßig durch ein aktives Pixeldesign in CMOS-Technik mit pixelweise integrierter Signalvorverarbeitung durchgeführt.

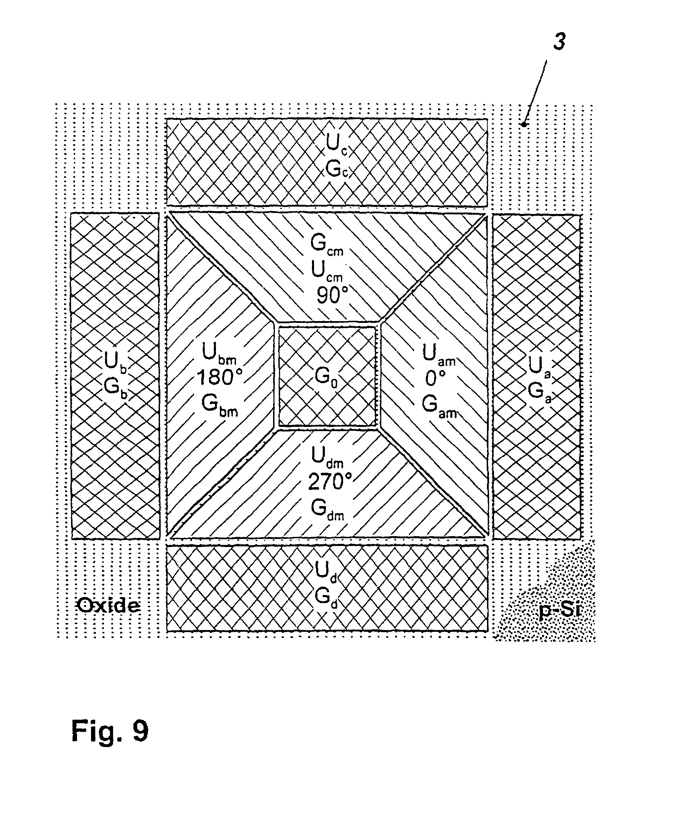

Fig. 9 zeigt ebenso wie Fig. 8 ein Vierfachpixel eines photonischen Mischelementes, allerdings mit einem entsprechend Fig. 6 geglättetem Potentialgefälle mit Hilfe des zentralen, vorzugsweise auf dem Potential $U_0$ liegenden quadratischen mittleren Gate $G_0$.

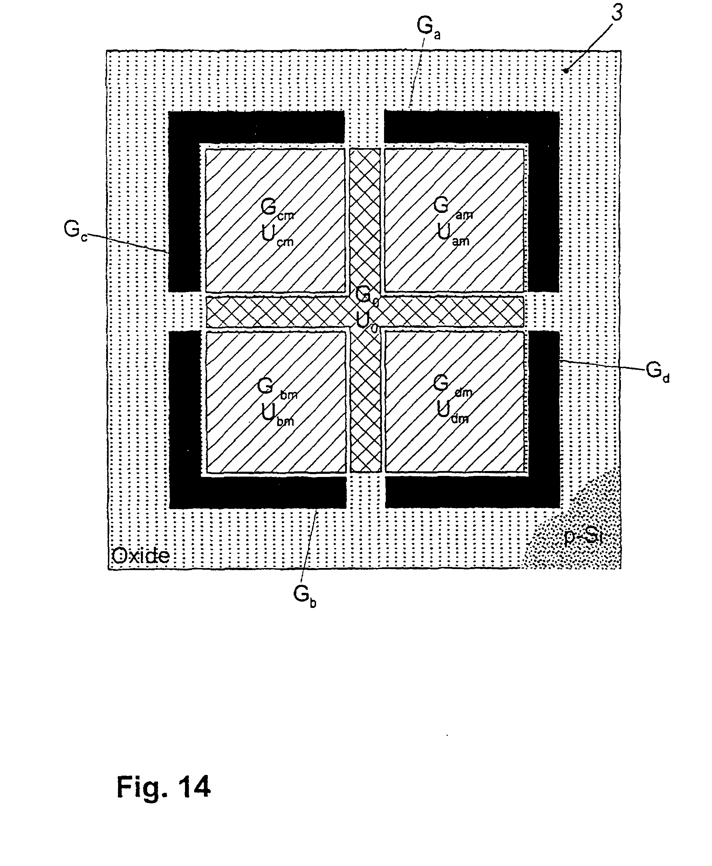

Fig. 14 zeigt ebenso wie Fig. 9 ein Vierfachpixel eines photonischen Mischelementes mit einer für digitale Modulationssignale optimierten Struktur. Das zwischen den vorzugsweise quadratischen Modulationsphotogates angeordnete mittlere Gate $G_0$ dient ähnlich wie in Fig. 9 der Glättung des durch die Modulationsphotogatespannung erzeugten Potentialgefälles.

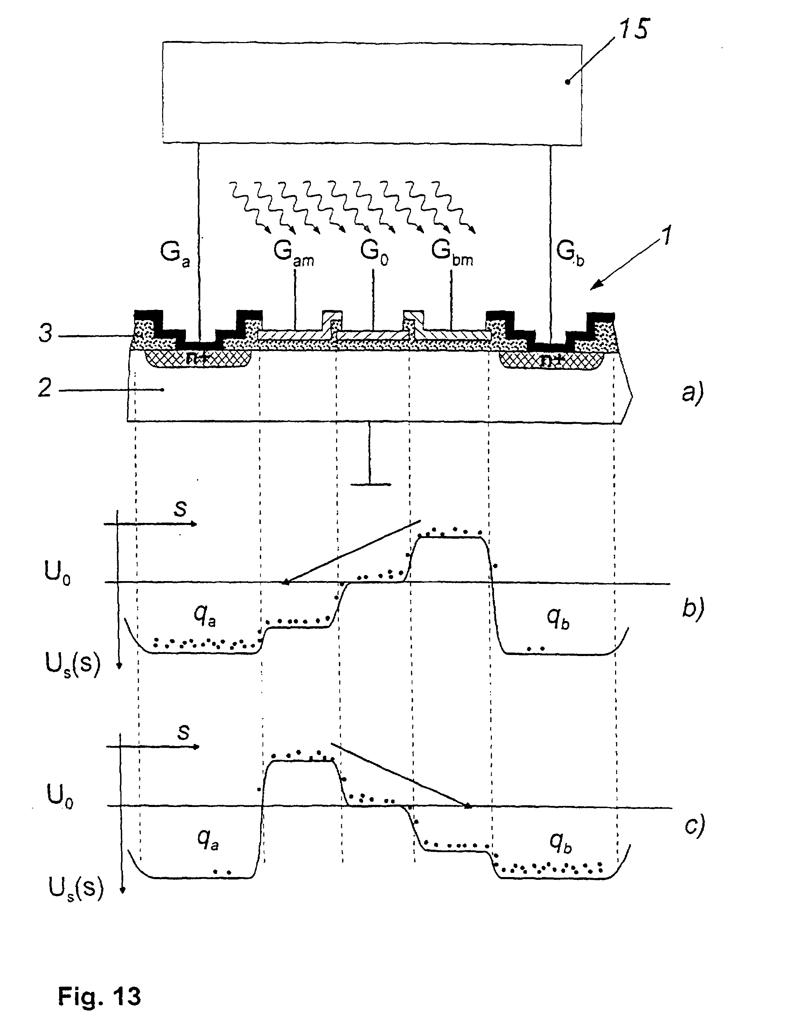

Fig. 13 zeigt schließlich eine weitere bevorzugte Ausführungsform eines Pixels 1, das im Gegensatz zu den zuvor aufgezeigten Ausführungsbeispielen nicht in CCD-Technologie, sondern in CMOS-Technologie mit pixelweiser Auslese- und Signalvorverarbeitungselektronik 15 realisiert ist. Die Funktionsweise des modulationspannungsabhängigen Driftens der Ladungsträger auf der Ladungsschaukel ist dabei dieselbe wie bei den zuvor aufgezeigten Ausführungsbeispielen. Unterschiedlich ist bei dem in Fig. 13 dargestellten Ausführungsbeispiel lediglich die Art der Weiterverarbeitung der zu den Akkumulationsgates $G_a$ und $G_b$ gedrifteten Ladungen $q_a$ und $q_b$.

Die Akkumulationsgates $G_a$ und $G_b$ sind im vorliegenden Ausführungsbeispiel als gesperrte pn-Dioden ausgebildet. Auf einem vorzugsweise schwach dotierten p-Si-Substrat 3 in Fig. 13 werden die positiv vorgespannten Akkumulationsgates $G_a$ und $G_b$ durch $n_+$-dotierte Elektroden gebildet. Im sog. "Floating-Diffusion"-Betrieb bzw. im hochohmigen Spannungsauslesemodus werden wie bei der CCD-Technologie die Ladungen $q_a$ und $q_b$ auf den Kapazitäten der Akkumulationsgates $G_a$ und $G_b$ integriert und als Spannungswerte hochohmig ausgelesen.

In vorteilhafter Weise kann auch ein Stromauslesemodus eingesetzt werden, bei dem die photogenerierten Ladungsträger nicht im Potentialtopf integriert, sondern fortlaufend über eine Ausgangsdiffusion über an die Akkumulationsgates $G_a$ bzw. $G_b$ angeschlossene, geeignete Stromausleseschaltungen weitergeleitet werden. Anschließend werden diese Ladungen bspw. jeweils auf einer externen Kapazität integriert.

Durch eine Ausleseschaltung im Stromauslesemodus, der durch Verstärkerrückkopplung die Akkumulationsgatespannung virtuell konstant hält, wird in vorteilhafter Weise vermieden, daß bei einer intensiven Bestrahlung des Pixels die Menge der angesammelten Ladungen $q_a$ und $q_b$ zu einer Rückwirkung oder gar zu einem Überlaufen des Potentialtopfes führt. Die Dynamik des photonischen Mischelementes wird dadurch erheblich verbessert. Auch hierbei wird durch die genannte Technik eines Schwach dotierten n-Kanals ("Buried Layer") unter der Isolierschicht der Modulationsgates Verbesserungen, u.a. eine Steigerung der Grenzfrequenz erzielt.

Die Ausgestaltung des photonischen Mischelementes in CMOS-Technologie ermöglicht weiterhin die Anwendung eines Aktiv-Pixel-Designs (APS), mit dem zu jedem Pixel eine Auslese- und Signalvorverarbeitungsschaltung in das photonische Mischelement integriert werden kann. Somit ist eine Vorverarbeitung der elektrischen Signale direkt am Pixel möglich, bevor die Signale an eine externe Schaltung weitergeleitet werden. Insbesondere kann somit die Phasen- und Amplitudeninformation direkt auf dem Chip berechnet werden, so daß sich die Meßrate weiter erhöhen läßt.

In einer weiteren Ausgestaltung der Erfindung wird ein vorzugsweise zweidimensionales photonisches Mischelementarray für eine dreidimensionale elektronische Objektsuche und -verfolgung passiv oder aktiv leuchtender Objekte nach verschiedenen Kriterien, wie z.B. Objektform, -position, -farbe, -polarisation, -geschwindigkeitsvektor, -helligkeit oder einer Kombinantion von Objekteigenschaften verwendet. Wird z.B. beim Durchlaufen verschiedener Modulationssignale (z.B. Frequenz- oder Codeänderung) bei der 3D-Vermessung einer einfallenden Lichtwelle, die zunächst unbekannt sein kann, eine örtliche Korrelation durch das Kriterium von Differenzdriftströmen ungleich Null gefunden, so kann danach fortlaufend dieser Objektbereich gezielt bezüglich der genannten Objekteigenschaften vermessen und ggfs. bei Veränderungen über eine Regelschleife, die insbesondere die Bildtiefe mit einschließt, verfolgt werden.

Das photonische Mischelement wird in verschiedenen Betriebsweisen eingesetzt, die im folgenden dargestellt werden.

Die Summenladung an den Akkumulationsgates $G_a$ und $G_b$ interessiert hierbei weniger, da sie immer der Gesamtintensität der einfallenden Lichtwellen entspricht, $q_a + q_b = $ const.$*P_{opt,ges}*T$ mit T = Integrationszeit.

Die Differenzladung $\Delta q_{ab} = q_a - q_b = \bar{i}_a \cdot T - \bar{i}_b \cdot T$ hängt von mehreren Faktoren ab und kann in mehrfacher Weise zur Vermessung der einfallenden Lichtwelle genutzt werden. Dazu wird eine immer vorhandene Grundhelligkeit $P_0 >= P_m$ (s. Fig. 3a ) berücksichtigt.

Wahlweise wird z.B. bei einer Vermessung eines durch einen Sender 4 mit moduliertem Licht beleuchteten Objekts 6 die Sendeleistung einoder ausgeschaltet und damit wird Pm endlich oder gleich Null. Gleichzeitig wird wahlweise die Modulationsspannung Um(t) entweder zu Null oder auf den im Sender verwendeten oder im einfallenden Licht enthaltenen Verlauf oder auf eine während der Integrationszeit konstante Spannung $U_{m0}$ geschaltet.

Damit ergeben sich mit $P_0 \neq 0$ vier wichtige Betriebsweisen:

1.) $\Delta q_{ab}$ =0 für $P_m$=0 und Um=0.

2.) $\Delta q_{ab}$=0 bei endlichem $P_m$ und mit $U_m(t)$ als HF-Modulationssignal.

3.) Mit endlichem $P_m$ und einer hochfrequenten Modulationsspannung ist $\Delta q_{ab}$ eine Funktion von Um(t), von der relativen Modulationslaufzeitverschiebung $\tau$ und von dem einfallenden, derart modulierten Lichtleistungsanteil Pm (t).

4.) Besteht während einer Integrationszeit T eine einfallende mittlere Lichtintensität $P_0$ und eine konstante Modulationsspannung $U_{m0}$, so ist die Differenzladung $\Delta q_{ab}$ eine Funktion von $U_{m0}$ und der mittleren Lichtleistung $P_0$.

Bei Lichtwellen, die nicht intensitätsmoduliert sind, wird in einer weiteren Ausgestaltung der Erfindung das photonische Mischelement entsprechend dem vierten Fall einer möglichen Betriebsweise z.B. für die 2D-Bildverarbeitung eingesetzt.

Dabei ist jedes Mischelement gezielt und unabhängig voneinander ansteuerbar, z.B. durch pixelweise Zuordnung je eines schnell überschreibbaren Modulationsspannungswortes für $U_{m0}$ vorzugsweise mittels eines RAM-Bausteins. Ausgewertet werden vorzugsweise nur die näherungsweise zu $U_{m0}$ proportionalen Differenzdriftströme $\Delta \bar{i}_{ab}$ bzw. Differenzladungen $T^*\Delta \bar{i}_{ab}$. Die Modulationsspannung $U_{m0}$ wird dabei jeweils von dem Modulationsspannungswort abgeleitet.

Damit wird $U_m(t)$ nicht mehr periodisch oder quasi-periodisch wie in den vorangehenden Anwendungsbeispielen, sondern aperiodisch z.B. gemäß einem vorgegebenen oder gemäß dem gemessenen Bildinhalt eingestellt. Für Um(t)=0 ergeben sich alle Differenzströme zu Null, so daß das zugehörige Differenzbild D(x,y) ebenfalls mit der Amplitude bzw. Intensität Null erscheint.

Die Differenzbildhelligkeit kann somit gezielt durch Variation von Um(x,y,t) beeinflußt werden. Damit können erfindungsgemäß beliebige, also auch unmodulierte Lichtwellen bzw. Bilder über eine extrem schnell einstellbare Gewichtsfunktion $G(x,y,t)=k_1*U_m(x,y,t)$ z.B. über die genannten steuerbaren, pixelweise zugeordneten Speicherzellen einer vielseitigen Bildverarbeitung erschlossen werden, wie z.B. die zuvor aufgeführten Anwendungen zur Objektsuche und -verfolgung, allerdings hierbei ohne den Aspekt der Tiefeninformation.

**Patentansprüche**

**1.** Verfahren zur Bestimmung der Phasen- und/oder Amplitudeninformation einer elektromagnetischen Welle

- bei dem eine elektromagnetische Welle auf die Oberfläche eines mindestens ein Pixel aufweisenden photonischen Mischelementes eingestrahlt wird, wobei das Pixel mindestens zwei lichtempfindliche Modulationsphotogates $G_{am}$ und $G_{bm}$ und zugeordnete Akkumulationsgates $G_a$ und $G_b$ aufweist,

- bei dem an die Modulationsphotogates $G_{am}$ und $G_{bm}$ Modulationsphotogatespannungen $U_{am}(t)$ und $U_{bm}(t)$ angelegt werden, die als $U_{am}(t)=U_o+U_m(t)$ und $U_{bm}(t)=U_o-U_m(t)$ ausgestaltet sind,

- bei dem an die Akkumulationsgates $G_a$ und $G_b$ eine Gleichspannung angelegt wird, deren Betrag mindestens so groß wie der Betrag der Summe aus $U_0$ und der Amplitude der Modulationsspannung $U_m(t)$ ist,

- bei dem die in der Raumladungszone der Modulationsphotogates $G_{am}$ und $G_{bm}$ von der einfallenden elektromagnetischen Welle erzeugten Ladungsträger in Abhängigkeit von der Polarität der Modulationsphotogatespannungen $U_{am}(t)$ und $U_{bm}(t)$ dem Potentialgefälle eines Driftfeldes ausgesetzt werden und zum entsprechenden Akkumulationsgate $G_a$ oder $G_b$ driften und

- bei dem die jeweils zu den Akkumulationsgates $G_a$ und $G_b$ gedrifteten Ladungen $q_a$ und $q_b$ abgeleitet werden.

**2.** Verfahren nach Anspruch 1,

- bei dem von einem Sender eine intensitätsmodulierte elektromagnetische Welle abgestrahlt wird,

- bei dem die von einem Objekt reflektierte elektromagnetische Welle auf die Oberfläche des photonischen Mischelementes eingestrahlt wird,

- bei dem die Modulationsphotogatespannungen $U_{am}(t)$ und $U_{bm}(t)$ mit der Phase der vom Sender abgestrahlten elektromagnetische Welle in fester Phasenbeziehung stehen und

- bei dem die erzeugten Ladungsträger zusätzlich in Abhängigkeit von der Phase der Gegentakt-Modulationsphotogatespannungen $U_{am}(t)$ und $U_{bm}(t)$ dem Potentialgefälle eines Driftfeldes ausgesetzt werden.

**3.** Verfahren nach Anspruch 2,

- bei dem für zwei verschiedene Phasenverschiebungen $\Delta_{\varphi 1}$ und $\Delta_{\varphi 2}$ der Modulationsphotogatespannungen $U_{am}(t)$ und $U_{bm}(t)$ relativ zur Phase der vom Sender abgestrahlten elektromagnetische Welle die Ladungen $q_{a1}$ und $q_{b1}$ sowie $q_{a2}$ und $q_{b2}$ abgeleitet und die Ladungsdifferenzen $(q_{a1} - q_{b1})$ und $(q_{a2} - q_{b2})$ gebildet werden und

- bei dem nach der Gleichung

$$\varphi_{opt} = \frac{q_{a2} - q_{b2}}{q_{a1} - q_{b1}}$$

die Pixelphase $\varphi_{opt}$ der einfallenden elektromagnetischen Welle relativ zur Phase der vom Sender abgestrahlten elektromagnetischen Welle und somit die Laufzeit der vom Pixel empfangenen elektromagnetischen Welle bestimmt wird.

**4.** Verfahren nach Anspruch 3,

- bei dem mit Hilfe von vier Modulationsphotogates $G_{am}$, $G_{bm}$, $G_{cm}$ und $G_{dm}$ und von vier zugeordneten Akkumulationsgates $G_a$, $G_b$, $G_c$ und $G_d$, für zwei verschiedene Phasenverschiebungen $\Delta_{\varphi 1}$ und $_{\varphi 2}$ der Modulationsphotogatespannungen $U_{am}(t) = U_0 + U_{m1}(t)$ und $U_{bm}(t) = U_0 - U_{m1}(t)$ sowie $U_{cm}(t) = U_1 + U_{m2}(t)$ und $U_{dm}(t) = U_1 - U_{m2}(t)$ relativ zur Phase der vom Sender abgestrahlten elektromagnetischen Welle gleichzeitig die Ladungen $q_a$, $q_b$, $q_c$ und $q_d$ getrennt und abgeleitet werden und

- bei dem nach der Gleichung

$$\varphi_{opt} = \frac{q_c - q_d}{q_a - q_b}$$

die Pixelphase $\varphi_{opt}$ dervom Sender abgestrahlten elektromagnetischen Welle und somit die Laufzeit der vom Pixel empfangenen elektromagnetischen Welle bestimmt wird.

**5.** Verfahren nach einem der vorangegangenen Ansprüche,

- bei dem das photonische Mischelement eine Mehrzahl von Pixeln aufweist,

- bei dem mindestens ein Pixel mit einem Teil der intensitätsmodulierten elektromagnetischen Welle vom Sender direkt bestrahlt wird und

- bei dem aus der mit diesem Pixel gemessenen Phasenverschiebung eine Kalibrierung der Phasenverschiebung zwischen der abgestrahlten elektromagnetischen Welle und den Modulationsphotogatespannungen $U_{am}$(t) und $U_{bm}$(t) durchgeführt wird.

6. Verfahren nach Anspruch 1,

- bei dem eine elektromagnetische Welle mit fremderregter unbekannter Intensitätsmodulation auf die Oberfläche des photonischen Mischelementes eingestrahlt wird,

- bei dem die Modulationsphotogatespannungen $U_{am}$(t) und $U_{bm}$(t) von einem durchstimmbaren Modulationsgenerator erzeugt werden,

- bei dem die erzeugten Ladungsträger zusätzlich in Abhängigkeit von der Phase der Gegentakt-Modulationsphotogatespannungen $U_{am}$(t) und $U_{bm}$(t) dem Potentialgefälle eines Driftfeldes ausgesetzt werden und

- bei dem das photonische Mischelement und der Modulationsgenerator mindestens einen Phasenregelkreis bilden und die elektromagnetische Welle nach der Lock-in-Methode vermessen wird.

7. Verfahren nach einem der Ansprüche 1 bis 6, bei dem als periodische Modulation eine kontinuierliche oder diskontinuierliche HF-Modulation, eine Pseudo-Rausch-Modulation oder eine Chirp-Modulation verwendet wird.

8. Verfahren nach Anspruch 7, bei dem die Modulation eine HF-Modulation ist und vorzugsweise die Ladungen $q_a$ und $q_b$ und ggfs. $q_c$ und $q_d$ für die Phasenverschiebungen $\Delta\varphi$ = 0°/180° und 90°/270° abgeleitet werden.

9. Verfahren nach Anspruch 1, bei welchem eine stationäre Modulation mit Modulationsphotogatespannungen $U_{am}$ = $U_0$ + $U_{m0}$ und $U_{bm}$ = $U_0$ - $U_{m0}$ mit einer zeitweise konstanten, einstellbaren Modulationsgleichspannung $U_{m0}$, mit der das Differenzbild aus der Differenz der Ladungen $q_a$ und $q_b$ gezielt gewichtet wird, verwendet wird.

10. Verfahren nach einem der Ansprüche 1 bis 9, bei dem die Ladungen $q_a$ und $q_b$ unterhalb der Akkumulationsgates $G_a$ und $G_b$ integriert werden und mit einer Multiplexstruktur, vorzugsweise mit einer CCD-Struktur, ausgelesen werden.

11. Verfahren nach einem der Ansprüche 1 bis 9, bei dem die Akkumulationsgates $G_a$ und $G_b$ als pn-Dioden, vorzugsweise als gesperrte kapazitätsarme pn-Dioden und vorzugsweise in CMOS-Technologie, ausgebildet sind und bei dem die Ladungen $q_a$ und $q_b$ und gegebenenfalls $q_c$ und $q_d$ direkt als Spannung oder als Strom ausgelesen werden.

12. Verfahren nach Anspruch 11, bei welchem die Pixelphase bzw. die Pixellaufzeit und die Pixelhelligkeit direkt mit Hilfe einer Aktiv-Pixel-Sensor-Struktur (APS) ermittelt und vorzugsweise über eine On-Chip-Multiplexstruktur wahlfrei und/oder seriell ausgelesen werden.

13. Verfahren nach einem der Ansprüche 1 bis 12, bei welchem die Pixelhelligkeit jeweils als Summe der Ladungen der zugehörigen Akkumulationsgates als Grauwertbild ausgewertet wird.

14. Verfahren nach einem der Ansprüche 1 bis 13, **dadurch gekennzeichnet, daß** im Falle einer Hintergrundbeleuchtung bzw. einer externen, nicht modulierten Zusatzbeleuchtung die Differenz der Grauwertbilder einerseits bei eingeschalteter und andererseits bei ausgeschalteter modulierter Beleuchtung als Korrekturgröße verwendet wird.

15. Verfahren nach einem der Ansprüche 1 bis 14, **dadurch gekennzeichnet, daß** mehrere separate Mischelemente in einer linearen, flächigen oder räumlichen Feldanordnung verwendet werden.

16. Verfahren nach Anspruch 15, **dadurch gekennzeichnet, daß** mindestens eines der Pixel direkt mit einem Teil der als Beleuchtung dienenden, intensitätsmodulierten elektromagnetischen Welle bestrahlt wird und daß die Messung an diesem mindestens einen Pixel zum Kalibrieren der übrigen Phasen und Helligkeitsergebnisse verwendet wird, wobei vorzugsweise das bzw. die Referenzpixel vom Sender mit unterschiedlichen bzw. unterschiedlich einstellbaren Intensitäten beaufschlagt werden.

17. Photonisches Mischelement

   - mit mindestens einem Pixel (1),

   - das mindestens zwei lichtempfindliche Modulationsphotogates ($G_{am}$, $G_{bm}$) und

   - den Modulationsphotogates ($G_{am}$, $G_{bm}$) zugeordnete, gegenüber der einfallenden elektromagnetischen Welle abgeschattete Akkumulationsgates ($G_a$, $G_b$) aufweist.

18. Mischelement nach Anspruch 17, **dadurch gekennzeichnet, daß** zwischen den Modulationsphotogates ($G_{am}$, $G_{bm}$) ein mittleres Gate ($G_0$) angeordnet ist.

19. Mischelement nach Anspruch 17 oder 18, **dadurch gekennzeichnet, daß** das Pixel (1) vier, vorzugsweise symmetrisch angeordnete, Modulationsphotogates ($G_{am}$, $G_{bm}$, $G_{cm}$, $G_{dm}$) und Akkumulationsgates ($G_a$, $G_b$, $G_c$, $G_d$) aufweist.

20. Mischelement nach einem der Ansprüche 17 bis 19, **dadurch gekennzeichnet, daß** die Akkumulationsgates ($G_a$, $G_b$ und gegebenenfalls $G_0$, $G_d$) als pn-Dioden, vorzugsweise als gesperrte, kapazitätsarme pn-Dioden und vorzugsweise in CMOS-Technik ausgeführt, ausgebildet sind und die Ladungen $q_a$, $q_b$ und gegebenenfalls $q_c$, $q_d$ direkt als Spannung oder als Strom auslesbar sind.

21. Mischelement nach einem der Ansprüche 17 bis 20, **dadurch gekennzeichnet, daß** zwecks Erhöhung der maximalen Modulationsgeschwindigkeit das Pixel in GaAs-Technik, vorzugsweise in "Buried Channel"-Technik, zum Beispiel vergrabener n-Kanal, und mit integriertem Driftfeld ausgebildet ist.

22. Mischelement nach einem der Ansprüche 17 bis 21, **dadurch gekennzeichnet, daß** das Pixel (1) als Aktiv-Pixel-Sensor-Struktur mit teilweise pixelbezogener Signalverarbeitung und teilweise Zeilen- oder gegebenenfalls matrixbezogener Signalverarbeitung ausgebildet ist.

23. Mischelement nach einem der Ansprüche 17 bis 22, **dadurch gekennzeichnet, daß** die Abschattung auch auf die Randbereiche der Modulationsphotogates ausgedehnt ist.

24. Mischelementanordnung mit mindestens zwei photonischen Mischelementen nach einem der Vorrichtungsanspr üche 17 bis 23, **dadurch gekennzeichnet, daß** die photonischen Mischelemente in einer eindimensionalen, zweidimensionalen oder dreidimensionalen Anordnung angeordnet sind.

25. Mischelementanordnung nach Anspruch 24, **dadurch gekennzeichnet, daß** jeweils zwei benachbart angeordneten, unterschiedlichen Pixeln (n, n+1) zugeordnete Modulationsphotogates ($G_{am,n}$, $G_{am,n+1}$) bzw. ($G_{bm,n}$, $G_{bm,n+1}$) jeweils ein gemeinsames Akkumulationsgate ($G_s$) aufweisen und daß die Modulationsphotogates ($G_{am,n}$, $G_{am,n+1}$) bzw. ($G_{bm,n}$, $G_{bm,n+1}$) jeweils von der gleichen Modulationsphotogatespannungen $U_{am}(t)$ bzw. $U_{bm}(t)$ beaufschlagt sind.

26. Mischelementanordnung nach Anspruch 24 oder 25, **dadurch gekennzeichnet, daß** Einrichtungen für die direkte Bestrahlung mindestens eines Pixels (1) als Referenzpixel vorgesehen sind, durch welche ein Teil der von dem Sender ausgehenden intensitätsmodulierten elektromagnetischen Strahlung auf das bzw. die betreffende(n) Pixel gerichtet wird.

27. Mischelementanordnung nach Anspruch 26, **dadurch gekennzeichnet, daß** die Einrichtungen für die direkte Bestrahlung für eine räumliche und/oder zeitliche Änderung der Intensität der direkten Bestrahlung ausgerüstet sind.

28. Ein- oder mehrdimensionale Mischelementanordnung nach einem der Ansprüche 24 bis 27, **dadurch gekennzeichnet, daß** die Pixel (1) in MOS-Technik auf einem Siliciumsubstrat (2) ausgeführt und mit einer Multiplexstruktur, vorzugsweise mit einer CCD-Struktur, auslesbar sind.

29. Mischelementanordnung nach einem der Ansprüche 24 bis 28, **dadurch gekennzeichnet, daß** eine Mikrolinsenoptik vorgesehen ist, welche im wesentlichen für jedes für die Bildaufnahme verwendete Mischelement eine eigene Mikrolinse bereitstellt, durch welche die einfallende Strahlung auf einen zentralen Bereich des somit verkleinerbaren Mischelementes fokussiert wird.

**30.** Vorrichtung zur Bestimmung der Phaseninformation einer elektromagnetischen Welle

- mit mindestens einem photonischen Mischelement nach einem der Vorrichtungsansprüche 17 bis 23,

- mit einem Modulationsgenerator (10, 13),

- mit einem Sender (4), dessen abgestrahlte elektromagnetische Welle vom Modulationsgenerator (10, 13) in vorgegebener Weise intensitätsmoduliert ist,

- wobei die von einem Objekt (6) reflektierte elektromagnetische Welle auf die Oberfläche des photonischen Mischelementes einstrahlt und

- wobei der Modulationsgenerator (10, 13) das photonische Mischelement mit Modulationsspannungen $U_m(t)$ versorgt, die in vorgegebener Phasenbeziehung zur Phase der abgestrahlten elektromagnetische Welle des Senders stehen.

**31.** Vorrichtung nach dem vorangegangenen Vorrichtungsanspruch, **dadurch gekennzeichnet, daß** eine Optik (7) und eine Mischelementanordnung gegebenenfalls nach einem der Ansprüche 24 bis 29 vorhanden sind, wobei die Optik (7) die reflektierte elektromagnetische Welle auf die Oberfläche des Mischelementes bzw. der Mischelementanordnung abbildet.

**32.** Vorrichtung nach Anspruch 30 oder 31, **dadurch gekennzeichnet, daß** eine Mischelementanordnung mit zugehöriger Empfangsoptik, Auswerteelektronik und Signalverarbeitung für die Differenzsignale, Summensignale und zugehörigen Referenzsignale, mit einem digitalen Speicher für das Grauwertbild und das Laufzeit- bzw. Entfernungsbild, einem eine dreidimensionale Szene mit modulierten, elektromagnetischen Wellen beleuchtenden Sender, mit einer der Empfangsoptik entsprechenden, einstellbaren Sendeoptik unter Bildung einer digitalen 3D-Photokamera in Form einer kompakten Einheit vorhanden sind.

**33.** Vorrichtung nach Anspruch 30 oder 31, **dadurch gekennzeichnet, daß** zur Bildung einer digitalen, dreidimensional aufnehmenden Videokamera eine Mischelementanordnung mit zugehöriger Empfangsoptik, Auswerteelektronik und Signalverarbeitung für die Differenzsignale, die Summensignale und die zugehörigen Referenzsignale, ein digitaler Speicher für das Grauwertbild und das Laufzeit- bzw. Entfernungsbild, einem eine dreidimensionale Szene mit modulierten, elektromagnetischen Wellen beleuchtenden Sender und mit einer der Empfangsoptik entsprechenden, einstellbaren Sendeoptik vorgesehen sind, wobei weiterhin Speichereinrichtungen für die Speicherung von digitalen Bildfolgen vorhanden sind.

**34.** Vorrichtung nach Anspruch 32 oder 33, **dadurch gekennzeichnet, daß** zur Erzeugung von Farbbildern bzw. Farbauszügen der Sender Einrichtungen zur Aussendung von Lichtwellen in verschiedenen Spektralbereichen vorhanden ist.

**Claims**

**1.** Method for determining the phase and/or amplitude information of an electromagnetic wave

- wherein an electromagnetic wave is applied to the surface of a photonic composite element having at least one pixel, whereby the pixel is provided with at least two light-sensitive modulating photo gates $G_{am}$ and $G_{bm}$ and associated accumulation gates $G_a$ and $G_b$,

- wherein modulating photogate voltages $U_{am}(t)$ and $U_{bm}(t)$ are applied to the modulating photogates $G_{am}$ and $G_{bm}$, which voltages are configured as $U_{am}(t) = U_0 + U_m(t)$ and $U_{bm}(t) = U_0 - U_m(t)$,

- wherein a direct voltage is applied to the accumulation gates $G_a$ and $G_b$, the value of which is as great as the value of the sum of $U_0$ and the amplitude of the modulating voltage $U_m(t)$,

- wherein the charge carriers generated in the space-charge zone of the modulating photo gates $G_{am}$ and $G_{bm}$ by the incident electromagnetic wave are exposed to the potential gradient of a drift field dependent upon the polarity of the modulating photo gate voltages $U_{am}(t)$ and $U_{bm}(t)$, and drift towards the corresponding accu-

mulation gates $G_a$ or $G_b$, and

- wherein the charges $q_a$ and $q_b$ that have drifted towards the accumulation gates $G_a$ and $G_b$ are differentiated.

2. Method according to claim 1,

- wherein an intensity-modulated electromagnetic wave is emitted by a transmitter,

- wherein the electromagnetic wave reflected from an object is applied to the surface of the photonic composite element,

- wherein the modulating photo gate voltages $U_{am}(t)$ and $U_{bm}(t)$ are in fixed phase relationship with the phase of the electromagnetic wave emitted by the transmitter, and

- wherein the charge carrier generated is additionally exposed to the potential gradient of a drift field dependent upon the phase of the push-pull modulating photo gate voltages $U_{am}(t)$ and $U_{bm}(t)$.

3. Method according to claim 2,

- wherein for two different phase shifts $\Delta_{\phi 1}$ and $\Delta_{\phi 2}$ of the modulating photo gate voltages $U_{am}(t)$ and $U_{bm}(t)$ relative to the phase of the electromagnetic wave emitted by the transmitter, the charges $q_{a1}$ and $q_{b1}$ and $q_{a2}$ and $q_{b2}$ are differentiated and the charges differences $(q_{a1} - q_{b1})$ and $(q_{a2} - q_{b2})$ are formed, and

- wherein according to the equation

$$\phi_{opt} = \frac{q_{a2} - q_{b2}}{q_{a1} - q_{b1}}$$

the pixel phase $\phi_{opt}$ of the incident electromagnetic wave relative to the phase of the electromagnetic wave emitted by the transmitter, and consequently the transit time of the electromagnetic wave received by the pixel, is determined.

4. Method according to claim 3,

- wherein with the aid of four modulating photo gates $G_{am'}$, $G_{bm'}$, $G_{cm}$ and $G_{dm}$, and of four associated accumulation gates $G_{a'}$, $G_{b'}$, $G_{c'}$ and $G_{d'}$, for two different phase shifts $\Delta_{\phi 1}$ and $_{\phi 2}$ of the modulating photo gate voltages $U_{am}(t) = U_0 + U_{m1}(t)$ and $U_{bm}(t) = U_0 - U_{m1}(t)$ and $U_{cm}(t) = U_1 + U_{m2}(t)$ and $U_{dm}(t) = U_1 - U_{m2}(t)$ relative to the phase of the electromagnetic wave emitted by the transmitter, the charges $q_a$, $q_b$, $q_c$ and $q_d$ are simultaneously separated and differentiated, and
- wherein according to the equation

$$\phi_{opt} = \frac{q_c - q_d}{q_a - q_b}$$

the pixel phase $\phi_{opt}$ of the electromagnetic wave emitted by the transmitter, and consequently the transit time of the electromagnetic wave received by the pixel, is determined.

5. Method according to one of the preceding claims,

- wherein the photonic composite element has a plurality of pixels,

- wherein at least one pixel is exposed to part of the intensity-modulated electromagnetic waves directly by the transmitter, and

- wherein calibration of the phase shift between the electromagnetic waves emitted and the modulating photo gate voltages $U_{am}(t)$ and $U_{bm}(t)$ is performed using the phase shift measured with this pixel,.

**6.** Method according to claim 1,

- wherein an electromagnetic wave with separate, unknown intensity modulation is applied to the surface of the photonic composite element

- wherein the modulating photo gate voltages $U_{am}(t)$ and $U_{bm}(t)$ are generated by a variable modulation generator,

- wherein the charge carrier generated is additionally exposed to the potential gradient of a drift field dependent upon the phase of the push-pull modulating photo gate voltages $U_{am}(t)$ and $U_{bm}(t)$,

- wherein the photonic composite element and the modulation generator form at least one phase control loop, and the electromagnetic wave is measured according to the lock-in method.

**7.** Method according to one of claims 1 to 6, wherein continuous or discontinuous HF modulation, pseudo-noise modulation or chirp modulation is used as periodic modulation.

**8.** Method according to claim 7, wherein the modulation is HF modulation, and preferably the charges $q_a$ and $q_b$ and possibly $q_c$ and $q_d$ are derived for the phase shifts $\Delta\varphi = 0°/180°$ and $90°/270°$.

**9.** Method according to claim 1, wherein stationary modulation is used with modulating photo gate voltages $U_{am} = U_0 + U_{m0}$ and $U_{bm} = U_0 - U_{m0}$ with an at times constant, adjustable modulating direct voltage $U_{m0}$, with which the differential image is specifically weighted from the difference of the charges $q_a$ and $q_b$.

**10.** Method according to one of claims 1 to 9, wherein the charges $q_a$ and $q_b$ are integrated downstream from the accumulation gates $G_a$ and $G_b$ and are read with a multiplexer, preferably with a CCD structure.

**11.** Method according to one of claims 1 to 9, wherein the accumulation gates $G_a$ and $G_b$ are configured as pn diodes, preferably as inhibited, low capacitance pn diodes, and preferably using CMOS technology, and wherein the charges $q_a$ and $q_b$ and possibly $q_c$ and $q_d$ are read directly as voltage or as current.

**12.** Method according to claim 11, wherein the pixel phase or respectively the pixel transit time and the pixel brightness are directly determined with the aid of an active pixel sensor structure (APS) and preferably read randomly and/or serially via an on-chip multiplex structure.

**13.** Method according to one of claims 1 to 12, wherein the pixel brightness is evaluated in each case as the sum of the charges of the associated accumulation gate as a grey scale picture.

**14.** Method according to one of claims 1 to 13, **characterised in that** when there is background lighting or respectively external non-modulated additional lighting, the difference in the grey scale picture, on the one hand with switched-on, and on the other hand with switched-off modulated lighting, is used as the correction value.

**15.** Method according to one of claims 1 to 14, **characterised in that** several separate composite elements are used in a linear, flat or spatial field arrangement.

**16.** Method according to claim 15, **characterised in that** at least one of the pixels is directly exposed to part of the intensity-modulated electromagnetic wave serving as lighting, and **in that** measurement on this at least one pixel is used for calibrating the other phases and brightness results, whereby preferably the reference pixel or respectively the reference pixels are subjected to different or respectively to differently adjustable intensities by the transmitter.

**17.** Photonic composite element

- with at least one pixel (1),

- that is provided with at least two light-sensitive modulating photo gates ($G_{am}$, $G_{bm}$), and

- accumulation gates ($G_a$, $G_b$) occluded with respect to the incident electromagnetic wave, associated with the

modulating photo gates ($G_{am}$, $G_{bm}$).

18. Composite element according to claim 17, **characterised in that** a central gate (Go) is arranged between the modulating photo gates ($G_{am}$, $G_{bm}$).

19. Composite element according to claim 17 or 18, **characterised in that** the pixel (1) is provided with four, preferably symmetrically arranged, modulating photo gates ($G_{am}$, $G_{bm}$, $G_{cm}$ and $G_{dm}$) and accumulation gates ($G_a$, $G_b$, $G_c$, $G_d$).

20. Composite element according to one of claims 17 to 19, **characterised in that** the accumulation gates ($G_a$, $G_b$ and possibly $G_0$, $G_d$) are configured as pn diodes, preferably as inhibited, low-capacitance pn diodes, and preferably using CMOS technology, and the charges $q_a$, $q_b$ and possibly $q_c$, $q_d$ can be read directly as voltage or as current.

21. Composite element according to one of claims 17 to 20, **characterised in that** for the purpose of increasing the maximum speed of modulation, the pixel is configured using GaAs technology, preferably "buried channel" technology, for example buried n-channel, and with an integrated drift field.

22. Composite element according to one of claims 17 to 21, **characterised in that** the pixel (1) is configured as an active pixel sensor structure with partly pixel-related signal processing and partly line or possibly matrix-related signal processing.

23. Composite element according to one of claims 17 to 22, **characterised in that** the occlusion is also extended to the edge regions of the modulating photo gates.

24. Composite element arrangement with at least two photonic composite elements according to one of the preceding device claims 17 to 23, **characterised in that** the photonic composite elements are arranged in a one-dimensional, two-dimensional or three-dimensional arrangement.

25. Composite element according to claim 24, **characterised in that** two respective modulating photo gates ($G_{am,n}$, $G_{am,n+1}$) and ($G_{bm,n}$, $G_{bm,n+1}$) adjacently arranged, and assigned to different pixels (n, n+1), each have a common accumulation gate ($G_s$), and **in that** the modulating photo gates ($G_{am,n}$, $G_{am,n+1}$) and ($G_{bm,n}$, $G_{bm,n+1}$) are each exposed to the same modulating photo gate voltages $U_{am}(t)$ and $U_{bm}(t)$.

26. Composite element arrangement according to claim 24 or 25, **characterised in that** devices for directly exposing at least one pixel (1) as a reference pixel are provided, by means of which a part of the intensity-modulated electromagnetic radiation emitted by the transmitter is directed towards the pixel or pixels concerned.

27. Composite element arrangement according to claim 26, **characterised in that** the devices for direct radiation are equipped for spatial and/or time change in the intensity of the direct radiation.

28. One or more dimensional composite element arrangement according to one of claims 24 to 27, **characterised in that** the pixels (1) are configured using MOS technology on a silicon substrate (2) and can be read with a multiplex structure, preferably with a CCD structure.

29. Composite element arrangement according to one of claims 24 to 28, **characterised in that** a micro lens optical system is provided that substantially provides an individual micro lens for each composite element used for image recording, by means of which lens the incident radiation is focussed onto the central region of the composite element, which element can consequently be reduced in size.

30. Device for determining the phase information of an electromagnetic wave

- with at least one photonic composite element according to one of the device claims 17 to 23,

- with a modulating generator (10, 13),

- with a transmitter (4), the emitted electromagnetic wave of which is intensity-modulated in a pre-determined manner by the modulating generator (10,13),

- wherein the electromagnetic wave reflected by an object (6) is applied to the surface of the photonic composite element, and

- wherein the modulating generator (10, 13) supplies the photonic composite element with modulating voltages $U_m(t)$, that are in a pre-determined phase relationship with the phase of the emitted electromagnetic wave of the transmitter.

**31.** Device according to one of the preceding device claims, **characterised in that** an optical system (7) and a composite element arrangement, possibly in accordance with one of claims 24 to 29, are present, wherein the optical system (7) focuses the reflected electromagnetic wave onto the surface of the composite element or elements.

**32.** Device according to claim 30 or 31, **characterised in that** a composite element arrangement with associated receiving optical system, evaluating electronics and signal processing for the difference signals, sum signals and associated reference signals, with a digital memory for the grey-scale picture and the transit time and distance image, and a transmitter illuminating a three-dimensional scene with modulated, electromagnetic waves, with an adjustable transmitting optical system matched with the receiving optical system, are present, forming a digital, 3-D photographic camera in the form of a compact unit.

**33.** Device according to claim 30 or 31, **characterised in that** in order to form a digital, three-dimensionally recording video camera, there is provided a composite element arrangement with associated receiving optical system, evaluating electronics and signal processing for the difference signals, the sum signals, and the associated reference signals, a digital memory for the grey scale picture, and the transit time and distance image, a transmitter illuminating a three-dimensional scene with modulated electromagnetic waves, and with an adjustable transmitting optical system matched with the optical receiving system are provided, wherein furthermore, memory devices for storing digital image sequences are present.

**34.** Device according to claim 32 or 33, **characterised in that** in order to generate colour images or respectively colour separation of the transmitter, devices are present for emitting light waves in different spectral ranges.

**Revendications**

**1.** Procédé pour déterminer l'information de phase et/ou d'amplitude d'une onde électromagnétique

- selon lequel une onde électromagnétique est émise sur la surface d'un élément mélangeur photonique comportant au moins un pixel, le pixel possédant au moins deux photogrilles photosensibles de modulation $G_{am}$ et $G_{bm}$ et des grilles d'accumulation associées $G_a$ et $G_b$,
- selon lequel aux photogrilles de modulation $G_{am}$ et $G_{bm}$ sont appliquées des tensions de photogrille de modulation $U_{am}(t)$ et $U_{bm}(t)$, qui sont présentes sous la forme $U_{am}(t)=U_0 + U_m(t)$ et $U_{bm}(t)=U_0-U_m(t)$,
- selon lequel aux grilles d'accumulation $G_a$ et $G_b$ est appliquée une tension continue, dont la valeur absolue est au moins aussi grande que la valeur absolue de la somme de $U_0$ et de l'amplitude de la tension de modulation $U_m(t)$,
- selon lequel les porteurs de charges, qui sont produits dans la zone de charges d'espace des photogrilles de modulation $G_{am}$ et $G_{bm}$ par l'onde électromagnétique incidente, sont soumis, en fonction de la polarité des tensions $U_{am}(t)$ et $U_{bm}(t)$ des photogrilles de modulation, au gradient de potentiel d'un champ de dérive et dérivent en direction de la grille d'accumulation correspondante $G_a$ ou $G_b$, et
- selon lequel les charges $q_a$ et $q_b$, qui ont respectivement dérivé en direction des grilles d'accumulation $G_a$ et $G_b$, sont détournées.

**2.** Procédé selon la revendication 1,

- selon lequel une onde électromagnétique modulée en intensité est émise par un émetteur,
- selon lequel l'onde électromagnétique réfléchie par un objet est dirigée sur la surface de l'élément mélangeur photonique,
- selon lequel les tensions $U_{am}(t)$ et $U_{bm}(t)$ des photogrilles de modulation sont dans une relation de phase fixe avec la phase de l'onde électromagnétique émise par l'émetteur, et
- selon lequel les porteurs de charges produits sont en plus soumis, en fonction de la phase des tensions $U_{am}(t)$ et $U_{bm}(t)$ des photogrilles de modulation en opposition, au gradient de potentiel d'un champ de dérive.

**3.** Procédé selon la revendication 2,

- selon lequel pour deux déphasages différents $\Delta_{\varphi 1}$ et $\Delta_{\varphi 2}$ des tensions $U_{am}(t)$ et $U_{bm}(t)$ des photogrilles de modulation par rapport à la phase de l'onde électromagnétique émise par l'émetteur, les charges $q_{a1}$ et $q_{b1}$ ainsi que $q_{b1}$, $q_{b2}$ sont dérivées et les différences de charges $(q_{a1} - q_{b1})$ et $(q_{a2} - q_{b2})$ sont formées et
- selon lequel, conformément à l'équation

$$\varphi_{opt} = \frac{q_{a2}-q_{b2}}{q_{a1}-q_{b1}}$$

la phase $\varphi_{opt}$ de pixel de l'onde électromagnétique incidente par rapport à la phase de l'onde électromagnétique émise par l'émetteur est déterminée et, à l'aide de cette phase, le temps de transit de l'onde électromagnétique reçue par le pixel est déterminé.

**4.** Procédé selon la revendication 3,

- selon lequel les charges $q_a$, $q_b$, $q_c$, $q_d$ sont séparées et dérivées simultanément à l'aide de quatre photogrilles de modulation $G_{am}$, $G_{bm}$, $G_{cm}$ et $G_{dm}$ et de quatre grilles d'accumulation associées $G_a$, $G_b$, $G_c$ et $G_d$, pour deux déphasages différents $\Delta_{\varphi 1}$ et $_{\varphi 2}$ des tensions $U_{am}(t)=U_0 + U_{m1}(t)$ et $U_{bm}(t) = U_0-U_{m1}(t)$ ainsi que $U_{cm}(t) =U_1 + U_{m2}(t)$ et $U_{dm}(t) = U_1-U_{m2}(t)$ des photogrilles de modulation par rapport à la phase de l'onde électromagnétique émise par l'émetteur, et
- selon lequel, conformément à l'équation

$$\varphi_{opt} = \frac{q_c-q_d}{q_a-q_b}$$

la phase $\varphi_{opt}$, de pixel de l'onde électromagnétique émise par l'émetteur et, avec cette phase, le temps de transit de l'onde électromagnétique reçue par le pixel est déterminé.

**5.** Procédé selon l'une des revendications précédentes,

- selon lequel l'élément mélangeur photonique comporte une multiplicité de pixels,
- selon lequel au moins un pixel est irradié directement par l'émetteur avec une partie de l'onde électromagnétique modulée en intensité et
- selon lequel un étalonnage du déphasage entre l'onde électromagnétique émise et les tensions $U_{am}(t)$ et $U_{bm}(t)$ des photogrilles de modulation est exécuté à partir du déphasage mesuré avec ce pixel.

**6.** Procédé selon la revendication 1,

- selon lequel une onde électromagnétique à modulation d'intensité inconnue, suscitée de façon extérieure, est dirigée sur la surface de l'élément mélangeur photonique,
- selon lequel les tensions $U_{am}(t)$ et $U_{bm}(t)$ des photogrilles de modulation sont produites par un générateur de modulation pouvant être accordé,
- selon lequel les porteurs de charges produits sont soumis en supplément, en fonction de la phase des tensions $U_{am}(t)$ et $U_{bm}(t)$ des photogrilles de modulation en opposition, au gradient de potentiel d'un champ de dérive, et
- selon lequel l'élément mélangeur photonique et le générateur de modulation forment au moins un circuit de régulation de phase et l'onde électromagnétique est mesurée selon le procédé lock-in.

**7.** Procédé selon l'une des revendications 1 à 6, selon lequel on utilise comme modulation périodique une modulation HF continue ou discontinue, une modulation par bruit pseudo-aléatoire ou une modulation de fréquence d'impulsion.

**8.** Procédé selon la revendication 7, selon lequel la modulation est une modulation HF et, de préférence, les charges $q_a$ et $q_b$ et éventuellement $q_c$ et $q_d$ sont dérivées pour les déphasages $\Delta\varphi = 0°/180°$ et $90°/270°$.

**9.** Procédé selon la revendication 1, selon lequel on utilise une modulation stationnaire avec des tensions $U_{am} =$

$U_0+U_{m0}$ et $U_{bm} = U_0-U_{m0}$ de photogrilles de modulation avec une tension continue réglable de modulation $U_{m0}$ constante dans le temps, au moyen de laquelle l'image de différence est pondérée de façon adéquate à partir de la différence des charges $q_a$ et $q_b$.

**10.** Procédé selon l'une des revendications 1 à 9, selon lequel les charges $q_a$ et $q_b$ sont intégrées au-dessous des grilles d'accumulation $G_a$ et $G_b$ et sont lues avec une structure multiplex, de préférence avec une structure à CCD.

**11.** Procédé selon l'une des revendications 1 à 9, selon lequel les grilles d'accumulation $G_a$ et $G_b$ sont réalisées sous la forme de diodes pn, de préférence sous la forme de diodes pn bloquées à faible capacité et, de préférence, selon la technologie CMOS, et selon lequel les charges $q_a$ et $q_b$ et éventuellement $q_c$ et $q_d$ sont lues directement en tant que tension ou en tant que courant.

**12.** Procédé selon la revendication 11, selon lequel la phase des pixels ou le temps de transit des pixels et la luminosité des pixels sont déterminés directement à l'aide d'une structure de capteur (APS) active pour les pixels et sont lus de façon aléatoire et/ou en série, de préférence par l'intermédiaire d'une structure multiplex sur puce.

**13.** Procédé selon l'une des revendications 1 à 12, selon lequel la luminosité des pixels est évaluée chaque fois sous forme de la somme des charges des grilles d'accumulation associées, en tant qu'image en demi-teintes.

**14.** Procédé selon l'une des revendications 1 à 13, **caractérisé en ce que** dans le cas d'un éclairement de fond ou d'un éclairement supplémentaire externe non modulé, la différence des images en demi-teintes, d'une part, dans le cas où l'éclairement modulé est activé et, d'autre part, dans le cas où l'éclairement modulé n'est pas activé, est utilisée en tant que grandeur de correction.

**15.** Procédé selon l'une des revendications 1 à 14, **caractérisé en ce qu'**on utilise plusieurs éléments mélangeurs séparés, dans une disposition de champ de forme linéaire, bidimensionnelle ou spatiale.

**16.** Procédé selon la revendication 15, **caractérisé en ce qu'**au moins l'un des pixels est projeté directement avec une partie de l'onde électromagnétique modulée en intensité qui sert d'éclairement, et **en ce que** la mesure au niveau de ce au moins un pixel est utilisée pour l'étalonnage des autres phases et des résultats de luminosité, auquel cas de préférence le ou les pixels de référence sont soumis, de la part de l'émetteur, à des intensités différentes ou réglables différemment.

**17.** Elément mélangeur photonique

- comprenant au moins un pixel (1),
- qui comporte au moins deux photogrilles de modulation photosensibles ($G_{am}$, $G_{bm}$) et
- des grilles d'accumulation ($G_a$, $G_b$) associées aux photogrilles de modulation ($G_{am}$, $G_{bm}$) et masquées par rapport à l'onde électromagnétique incidente.

**18.** Elément mélangeur selon la revendication 17, **caractérisé en ce qu'**une grille médiane ($G_0$) est disposée entre les photogrilles de modulation ($G_{am}$, $G_{bm}$).

**19.** Elément mélangeur selon la revendication 17 ou 18, **caractérisé en ce que** le pixel (1) comporte quatre photogrilles de modulation ($G_{am}$, $G_{bm}$, $G_{cm}$, $G_{dm}$) et grilles d'accumulation ($G_a$, $G_b$, $G_c$, $G_d$), de préférence disposées symétriquement.

**20.** Elément mélangeur selon l'une des revendications 17 à 19, **caractérisé en ce que** les grilles d'accumulation ($G_a$, $G_b$ et éventuellement $G_0$, $G_d$) sont conçues sous la forme de diodes pn, de préférence réalisées sous la forme de diodes pn bloquées à faible capacité et, de préférence, selon la technique CMOS, et les charges $q_a$, $q_b$ et éventuellement $q_c$, $q_d$ peuvent être lues directement en tant que tension ou en tant que courant.

**21.** Elément mélangeur selon l'une des revendications 17 à 20, **caractérisé en ce que** pour accroître la vitesse maximale de modulation, le pixel est réalisé selon la technique des composants au GaAs, de préférence selon la technique "buried channel", par exemple un canal n enterré, et avec un champ de dérive intégré.

**22.** Elément mélangeur selon l'une des revendications 17 à 21, **caractérisé en ce que** le pixel (I) est réalisé sous la forme d'une structure de capteur de pixel actif, avec un traitement des signaux rapporté partiellement au pixel et un traitement des signaux rapporté partiellement aux lignes ou éventuellement à la matrice.

23. Elément mélangeur selon l'une des revendications 17 à 22, **caractérisé en ce que** le masquage est étendu également aux zones marginales des photogrilles de modulation.

24. Dispositif à éléments mélangeurs comportant au moins deux éléments mélangeurs photoniques selon l'une des revendications de dispositif 17 à 23, **caractérisé en ce que** les éléments mélangeurs photoniques sont disposés selon une disposition unidimensionnelle, bidimensionnelle ou tridimensionnelle.

25. Dispositif à éléments mélangeurs selon la revendication 24, **caractérisé en ce que** respectivement deux photogrilles de modulation voisines ($G_{am,n}$, $G_{am,n-1}$) et ($G_{bm,n}$, $G_{bm,n+1}$), associées à des pixels différents (n, n+1), possèdent une grille commune respective d'accumulation ($G_S$) et **en ce que** les photogrilles de modulation ($G_{am,n}$, $G_{am,n+1}$) et ($G_{bm,n}$, $G_{bm,n+1}$) sont chargées respectivement par les mêmes tensions de photogrille de modulation $U_{am}(t)$ et $U_{bm}(t)$.

26. Dispositif à éléments mélangeurs selon la revendication 24 ou 25, **caractérisé en ce qu'**il est prévu des appareils pour l'irradiation directe d'au moins un pixel (1) en tant que pixel de référence, à l'aide desquels une partie du rayonnement électromagnétique modulé en intensité, émanant de l'émetteur, est dirigé sur le ou les pixel(s) considéré(s).

27. Dispositif à éléments mélangeurs selon la revendication 26, **caractérisé en ce que** les appareils d'irradiation directe sont équipés en vue d'une modification spatiale et/ou temporelle de l'intensité du rayonnement direct.

28. Dispositif unidimensionnel ou multidimensionnel à éléments mélangeurs selon l'une des revendications 24 à 27, **caractérisé en ce que** les pixels (1) sont réalisés selon la technique MOS sur un substrat en silicium (2) et peuvent être lus avec une structure multiplex, de préférence avec une structure à CCD.

29. Dispositif à éléments mélangeurs selon l'une des revendications 24 à 28, **caractérisé en ce qu'**il est prévu un système optique à microlentilles qui met à disposition essentiellement pour chaque élément mélangeur utilisé pour l'enregistrement d'une image, une microlentille propre, au moyen de laquelle le rayonnement incident est focalisé sur une partie centrale de l'élément mélangeur dont la taille peut ainsi être réduite.

30. Dispositif pour déterminer l'information de phase d'une onde électromagnétique comprenant

   - au moins un élément mélangeur photonique selon l'une des revendications de dispositif 17 à 23,
   - un générateur de modulation (10, 13),
   - un émetteur (4), dont l'onde électromagnétique émise est modulée en intensité d'une manière prédéterminée par le générateur de modulation (10, 13),
   - l'onde électromagnétique réfléchie par un objet (6) étant dirigée sur la surface de l'élément mélangeur photonique, et
   - le générateur de modulation (10, 13) alimentant l'élément mélangeur photonique avec des tensions de modulation $U_m(t)$, qui sont dans une relation de phase prédéterminée par rapport à la phase de l'onde électromagnétique émise de l'émetteur.

31. Dispositif selon la revendication précédente de dispositif, **caractérisé en ce qu'**un système optique (7) et un dispositif à éléments mélangeurs, éventuellement selon l'une des revendications 24 à 29, sont présents, le système optique (7) appliquant sur la surface de l'élément mélangeur ou du dispositif à éléments mélangeurs, l'onde électromagnétique réfléchie.

32. Dispositif selon la revendication 30 ou 31, **caractérisé en ce qu'**un dispositif à éléments mélangeurs comportant un système optique de réception associé, une unité électronique d'évaluation associée et une unité associée de traitement de signaux pour les signaux de différence, les signaux de somme et les signaux de référence associés, une mémoire numérique pour l'image en demi-teintes et pour l'image du temps de propagation ou de l'éloignement, un émetteur qui éclaire une scène tridimensionnelle avec des ondes électromagnétiques modulées, un système optique d'émission réglable, correspondant au système optique de réception, sont présents, en constituant une photocaméra en 3D numérique se présentant sous la forme d'une unité compacte.

33. Dispositif selon la revendication 30 ou 31, **caractérisé en ce que** pour la formation d'une caméra vidéo numérique d'enregistrement tridimensionnel, un dispositif à éléments mélangeurs comportant un système optique de réception associé, une unité électronique d'évaluation associée et une unité associée de traitement de signaux pour les signaux de différence, les signaux de somme et les signaux de référence associés, une mémoire numérique pour l'image en demi-teintes et pour l'image du temps de propagation ou de l'éloignement, un émetteur qui éclaire une scène tridimensionnelle avec des ondes électromagnétiques modulées et un système optique d'émission réglable, correspondant au système optique de réception, sont prévus, des dispositifs de mémoire pour la mémorisation de suites d'images numériques étant en outre présents.

34. Dispositif selon la revendication 32 ou 33, **caractérisé en ce que**, pour la production d'images en couleurs ou de choix de couleurs des émetteurs, il est prévu des dispositifs servant à émettre des ondes lumineuses dans différentes plages spectrales.

**Fig. 1**

Fig. 2

EP 1 009 984 B1

**Fig. 3**

$$\varphi_{opt} = \omega_m \cdot \tau$$

Fig. 4

$T_W$

$U_m$

a)

$T_B$

5

10

15

$t/T_B$

$I_0$

$\bar{i_a}$

$\bar{i_c}$

$\bar{i_a}+\bar{i_b}+\bar{i_c}+\bar{i_d}=2I_0$

$\dfrac{I_0}{2}$

$\bar{i_b}$

$\bar{i_d}$

b)

0

$T_B$

5

10

15

$\tau/T_B$

$T_D=0$

$I_0$

$\bar{i_a}-\bar{i_b}+(\bar{i_c}-\bar{i_d}) = \Delta\bar{i}_{ab}+\Delta\bar{i}_{cd}$

$\bar{i_a}-\bar{i_b}-(\bar{i_c}-\bar{i_d}) = \Delta\bar{i}_{ab}-\Delta\bar{i}_{cd}$

0

$T_B$

5

10

15

$\tau/T_B$

$T_D=0$

c)

$-I_0$

# Fig. 5

**Fig. 6**

Fig. 7

Fig. 8

Fig. 9

$\varphi = 0°, 90°, 180°, 270°$

Fig. 10

**Fig. 11**

**Fig. 12**

**Fig. 13**

Fig. 14